# EUROPEAN PATENT SPECIFICATION

(11) **EP 2 354 827 B1**
(45) Date of publication and mention of the grant of the patent: **26.10.2016**
(21) Application number: 11000758.0
(22) Date of filing: 01.02.2011
(51) Int. Cl.: G02B 6/44, G02B 6/42, G02B 6/43

(54) **Optical interface cards, assemblies, and related methods, suited for installation and use in antenna system equipment**
Optische Schnittstellenkarten, Anordnungen und zugehörige Verfahren, geeignet zur Installation und Verwendung in Antennensystemausrüstungen
Cartes d'interfaces optiques, ensembles et procédés associés adaptés pour l'installation et l'utilisation dans un équipement de système d'antenne

(30) Priority: 04.02.2010 US 301495 P; 04.02.2010 US 301488 P; 23.03.2010 US 316584 P; 23.03.2010 US 316591 P; 31.03.2010 US 751895; 31.03.2010 US 751884
(43) Date of publication of application: 10.08.2011
(73) Proprietor: Corning Optical Communications LLC, Hickory, NC 28601 (US)
(72) Inventor: Blackwell, Chois, A., Jr., North Richland Hills TX 76180 (US); Cox, Terry, D., Keller TX 76248 (US)
(74) Representative: Sturm, Christoph

(56) References cited:
- EP-A1- 0 474 091
- US-A1- 2002 131 730
- US-A1- 2003 210 882
- US-A1- 2004 240 882
- US-A1- 2005 074 990
- US-A1- 2006 044 774
- US-A1- 2009 016 685
- US-B1- 6 469 905

## Description

### RELATED APPLICATIONS

This application is related to U.S. Provisional Patent Applications Serial No. 61/301,495 filed February 4, 2010 and Serial No. 61/301,488 filed February 4, 2010 and Serial No. 61/316,584 filed March 23, 2010 and Serial No. 61/316,591 filed March 23, 2010 and Serial No. 12/751,895 filed March 31, 2010 and Serial No. 12/751,884 filed March 31, 2010.

### BACKGROUND

### Field of the Disclosure

The technology of the disclosure relates generally to enclosures for housing distributed antenna system equipment provided in a distributed antenna system. The distributed antenna system equipment can include optical fiber-based distributed antenna equipment for distributing radio frequency (RF) signals over optical fiber to remote antenna units.

### Technical Background

Wireless communication is rapidly growing, with ever-increasing demands for high-speed mobile data communication. As an example, so-called "wireless fidelity" or "WiFi" systems and wireless local area networks (WLANs) are being deployed in many different types of areas (e.g., coffee shops, airports, libraries, etc.). Wireless communication systems communicate with wireless devices called "clients," which must reside within the wireless range or "cell coverage area" in order to communicate with an access point device.

One approach to deploying a wireless communication system involves the use of "picocells." Picocells are radio frequency (RF) coverage areas. Picocells can have a radius in the range from a few meters up to twenty meters as an example. Combining a number of access point devices creates an array of picocells that cover an area called a "picocellular coverage area." Because the picocell covers a small area, there are typically only a few users (clients) per picocell. This allows for minimizing the amount of RF bandwidth shared among the wireless system users. In this regard, head-end communication equipment can be provided to receive incoming RF signals from a wired or wireless network. The head-end communication equipment distributes the RF signals on a communication downlink to remote antenna units distributed throughout a building or facility. Client devices within range of the picocells can receive the RF signals and can communicate RF signals back to an antenna in the remote antenna unit, which are communicated back on a communication uplink to the head-end communication equipment and onto the network. The head-end communication equipment may be configured to convert RF signals into optical fiber signals to be communicated over optical fiber to the remote antenna units.

It may be desirable to provide a housing or enclosure for communication equipment for a distributed antenna system that is easily assembled. Thus, the housing or enclosure can be easily assembled in the field. Further, it may be desirable to provide communication equipment for a distributed antenna system that is compatible with expansion of picocells. Thus, it may be desirable to provide communication equipment for a distributed antenna system that can be easily upgraded or enhanced to support an increased number or type of remote antenna units, as an example. It may be further desired to allow technicians or other users to provide this increased support in the field, thus making it desirable to allow equipment changes and upgrades to easily be made in the communication equipment with ease and proper function.

Document US 2003 210 882 A1 discloses an optical fiber ramp management system, device and method for organizing, managing and storing optical fibers during and after the production of an opto-electronic assembly. Opto-electronic components are arranged on a substrate located at a first level so as to define a space between the components. The space defines an optical fiber pathway along the surface of the substrate through which optical fibers formed as fiber bundle travel. A ramp supports the fiber bundle as it extends from the substrate to a storage tray located at a second level. The optical fibers are retained on the storage tray as a plurality of unconstrained loops. The pathway, ramp and tray are formed to maintain the radius of curvature of the optical fiber at or above the minimum bend radius of the fiber.

### SUMMARY OF THE Detailed Description

Optical interface cards, assemblies, and related methods, which may be suited for installation and use in antenna system equipment, are disclosed. In one embodiment, optical interface cards are disclosed. Optical interface cards can provide an interface between optical and electrical signals in a communication system, including a distributed antenna communication system, as an example. In certain embodiments, the optical interface card comprises a printed circuit board (PCB) having a first end and a second end opposite the first end. At least one opening is disposed in the PCB between the first end and the second end of the PCB and having at least one first opening end and at least one second opening end opposite the at least one first opening end. At least one optical sub-assembly (OSA) is mounted to the at least one first opening end and extends into the at least one opening. In this manner, the OSA can be mounted on an end of a PCB to limit the length of exposed, unshielded wire extensions and printed traces on the PCB. This can provide for signal integrity of the signals after conversion to electrical signals.

In another embodiment, an optical interface assembly is provided. The optical interface assembly includes a first optical interface card (OIC) that comprises at least one first opening between a first end and a second end of the first OIC having at least one first opening end, and at least one first optical sub-assembly (OSA) mounted to the at least one first opening end and extending into the at least one first opening. A second OIC is provided that comprises at least one second opening between a first end and a second end of the second OIC having at least one second opening end, and at least one second OSA mounted to the at least one second opening end and extending into the at least one second opening. The optical interface assembly also includes at least one standoff disposed between the first OIC and second OIC.

In another embodiment, a method of assembling an optical interface card is provided. The method comprises providing a printed circuit board (PCB) having a first end and a second end opposite the first end. The method also comprises mounting at least one optical sub-assembly (OSA) to at least one first opening end of at least one opening disposed in the PCB between the first end and the second end of the PCB.

In another embodiment, a communications equipment enclosure is provided. The communications equipment enclosure comprises at least one compartment configured to house a plurality of communications components between a lower plenum and an upper plenum. The communications equipment enclosure also comprises at least one fan configured to draw in air from a first side of the communications equipment enclosure into the lower plenum and across the plurality of communications components into the upper plenum. The communications equipment enclosure also comprises an air outlet disposed on a second side of the communications equipment enclosure and coupled to the upper plenum to direct air drawn by the at least one fan into the upper plenum through the air outlet.

In another embodiment, a method of providing air cooling of communications components installed in a communications equipment enclosure is provided. The method includes drawing in air from a first side of the communications equipment enclosure into a lower plenum using at least one fan installed in the communications equipment enclosure. The method also includes drawing the air from the lower plenum across a plurality of communications components installed in the communications equipment enclosure between the lower plenum and an upper plenum. The method also includes drawing the air outside of the communications equipment enclosure through an air outlet disposed on a second side of the communications equipment enclosure and coupled to the upper plenum.

In another embodiment, a modular distributed antenna system assembly is provided. The assembly includes at least one first plate including at least one first locating alignment slot. The assembly also includes at least one second plate including at least one locating tab. The at least one locating tab engages with the at least one first locating alignment slot to align the at least one first plate in at least two dimensions to the at least one second plate to form an enclosure configured to support at least one distributed antenna system component.

Additional features and advantages will be set forth in the detailed description which follows, and in part will be readily apparent to those skilled in the art from that description or recognized by practicing the embodiments as described herein, including the detailed description that follows, the claims, as well as the appended drawings.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE FIGURES

**FIG. 1** is a partially schematic cut-away diagram of an exemplary building and building infrastructure in which a distributed antenna system is employed;
**FIG. 2** is an exemplary schematic diagram of an exemplary head-end communications unit ("HEU") deployed in the distributed antenna system in **FIG. 1****;**
**FIG. 3** is an exemplary distributed antenna system equipment housing assembly ("assembly") and enclosure configured to support the HEU of **FIG. 2****;**
**FIG. 4** is an exemplary optical interface module (OIM) comprised of a pair of optical interface cards (OIC) configured to be installed in the distributed antenna system equipment housing assembly **of** **FIG. 3** as part of the HEU;
**FIG. 5** is a front view of the enclosure of **FIG. 3** with a midplane interface card of the HEU of **FIG. 2** installed therein;
**FIG. 6** is a rear side perspective view of the enclosure of **FIG. 3** with the midplane interface card **of** **FIG. 5** installed on a midplane support installed therein;
**FIG. 7** is a close-up front, right side perspective view of the midplane interface card of **FIG. 5** installed on a midplane support installed in the enclosure of **FIG. 3****;**
**FIG. 8** illustrates a front side of the midplane interface card of **FIG. 5** without connectors attached to the midplane interface card;
**FIG. 9** illustrates a rear view of the enclosure of **FIG. 3** with a downlink base transceiver interface (BTS) card (BIC) being inserted into the enclosure and an uplink BIC fully inserted into the enclosure and connected to the midplane interface card disposed in the enclosure;
**FIGS. 10A** and **10B** illustrate front and rear perspective views, respectively, of BIC assemblies that can be inserted in the enclosure of **FIG.** 3 with the BIC disposed in the assemblies connected to the midplane interface card disposed in the enclosure of **FIG. 3****;**
**FIG. 11** illustrates a bottom view of the BIC assembly of **FIGS. 10A** and **10B****;**
**FIG. 12** illustrates a top view of the BIC assembly of **FIGS. 10** and **10B** installed in the enclosure of **FIG. 3****;**
**FIG. 13** is a side perspective view of the assembly of **FIG. 3** with downlink BIC connectors for the downlink BIC and uplink BIC connectors for the uplink BIC disposed in downlink and uplink BIC connector plates, respectively, which are attached to the front of the enclosure;
**FIG. 14** is a front perspective view of the BIC connector plate illustrated in FIG. 13 with BIC connectors disposed therethrough;
**FIG. 15** is a rear perspective view of the BIC connector plate with BIC connectors disposed therethrough illustrated in **FIG. 14****;**
**FIG. 16** is a rear side perspective view of the enclosure of **FIG. 13** illustrating cables connected to the BIC connectors disposed through the BIC connector plates routed through openings in the midplane support to the downlink BIC and uplink BIC disposed in the enclosure;
**FIG. 17** is a top view of the enclosure of **FIG. 13** illustrating cables connected to the BIC connectors disposed through the BIC connector plates routed through openings in the midplane support to the downlink BIC and uplink BIC disposed in the enclosure;
**FIG. 18** is a front exploded perspective view of plates of the enclosure of **FIG. 3** **that** are assembled together in a modular fashion to form the enclosure;
**FIGS. 19A** and **19B** illustrate top and bottom perspective views of the enclosure of **FIG. 3****;**
**FIG. 20** illustrates a close-up view of the engagement of the top plate of the enclosure in **FIG. 3** with a side plate and midplane support of the enclosure of **FIG. 3****;**
**FIG. 21** illustrates a close-up view of locating tabs disposed in the top plate of the enclosure of **FIG. 3** engaged with alignment slots disposed in the side plate of the enclosure of **FIG. 3****;**
**FIG. 22** is a side view of the OIM that can be disposed in the enclosure of FIG. 3;
**FIG. 23** is another perspective side view of the OIM that can be disposed in the enclosure of **FIG. 3****;**
**FIG. 24** is a rear perspective view of the OIM that can be disposed in the enclosure of **FIG. 3****;****FIG. 25** is a perspective view of an alignment block that secures the OIC to an OIM plate of the OIM of **FIGS. 23** and **24****;**
**FIG. 26A** is a rear perspective view the OIM of **FIGS. 23** and **24** without shields installed;
**FIG. 26B** is a rear perspective view the OIM of **FIGS. 23** and **24** with shield plates installed;
**FIG. 27** is a close-up rear view of the OIM of **FIGS. 23** and **24** showing standoffs disposed between two printed circuit boards (PCBs) of the OICs, wherein one of the PCBs is a floating PCB;
**FIG. 28** is a cross-sectional side view of the PCBs of the OICs secured to each other via the standoffs of **FIG. 27** to provide one of the OIC PCBs as a floating PCB and the other of the OIC PCBs as a fixed PCB;
**FIGS. 29A** and **29B** are perspective views of the floating standoffs in **FIG. 27****;**
**FIGS 29C and 29D** are side and top views, respectively, of the standoffs of **FIG. 31****;**
**FIG. 30** is a side cross-sectional view of the standoff of **FIG. 27****;**
**FIG. 31** is a side cross-sectional view of an alternative standoff that can be employed to secure the OIC PCBs and provide one of the OIC PCBs as a floating PCB;
**FIGS. 32A** and **32B** are side cross-sectional views of an alternative standoff that can be employed to secure the OIC PCBs and shield plates and provide one of the OIC PCBs as a floating PCB;
**FIG. 33** is a side view of the assembly of **FIG. 3** showing an OIC digital connector being connected to a complementary connector disposed in the midplane interface card to align the OIC RF connector to be connected to the complementary RF connector disposed in the midplane interface card;
**FIG. 34** is a top perspective view of an OIC disposed in the OIM of **FIGS. 26A** and **26B** illustrating the extension of the OIC PCB of beyond transmitter optical sub-assemblies (TOSAs) and receiver optical sub-assemblies (ROSAs) disposed in the OIC PCB;
**FIG. 35** is a front perspective view of the assembly and enclosure of **FIG. 3** with a cooling fan protector plate installed to protect a cooling fan installed in the enclosure;
**FIG. 36** is a side cross-sectional view of the enclosure of **FIG.** 35 illustrating a cooling fan duct disposed behind the cooling fan in the enclosure to direct air drawn into the enclosure by the cooling fan into a lower plenum of the enclosure;
**FIG. 37** is an exemplary schematic diagram of air flow drawn into the enclosure by the cooling fan through the enclosure of **FIG. 35****;**
**FIG. 38** is another side cross-sectional view of the enclosure of **FIG. 35** illustrating the directing of air through openings in a lower plenum plate through OICs installed in the enclosure and through openings disposed in an upper plenum plate in the enclosure;
**FIG. 39** is a rear perspective view of the enclosure of **FIG. 35** illustrating an air outlet from the upper plenum of the enclosure;
**FIG. 40** is a rear perspective view of the enclosure of **FIG. 35** illustrating the air outlet from the upper plenum of the enclosure with the top plate of the enclosure removed and illustrating openings in the upper plenum plate into the uplink BIC compartment of the enclosure; and
**FIG. 41** is a top view of the uplink BIC with openings disposed therein to allow air to flow from the downlink BIC to the uplink BIC disposed above the downlink BIC in the enclosure of **FIG. 35****.**

### DETAILED DESCRIPTION

Reference will now be made in detail to the embodiments, examples of which are illustrated in the accompanying drawings, in which some, but not all embodiments are shown. Indeed, the concepts may be embodied in many different forms and should not be construed as limiting herein; rather, these embodiments are provided so that this disclosure will satisfy applicable legal requirements. Whenever possible, like reference numbers will be used to refer to like components or parts.

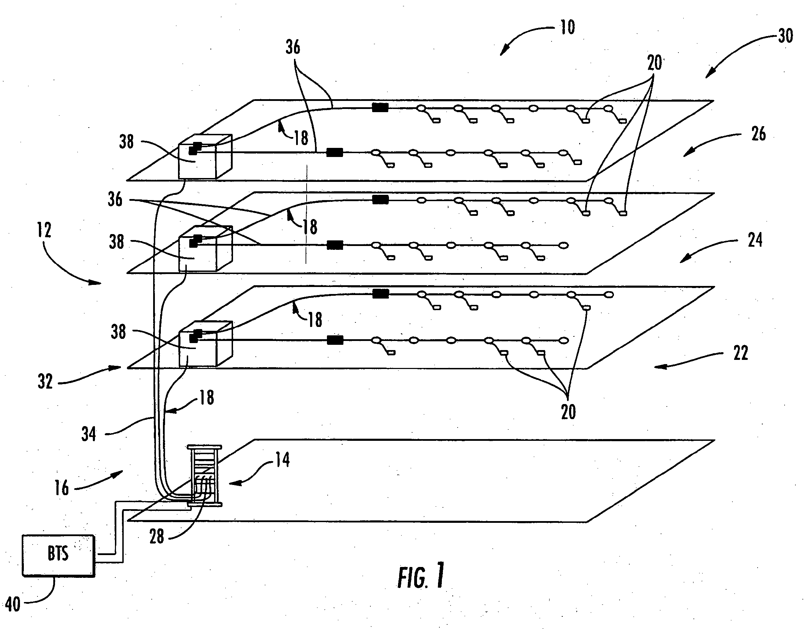

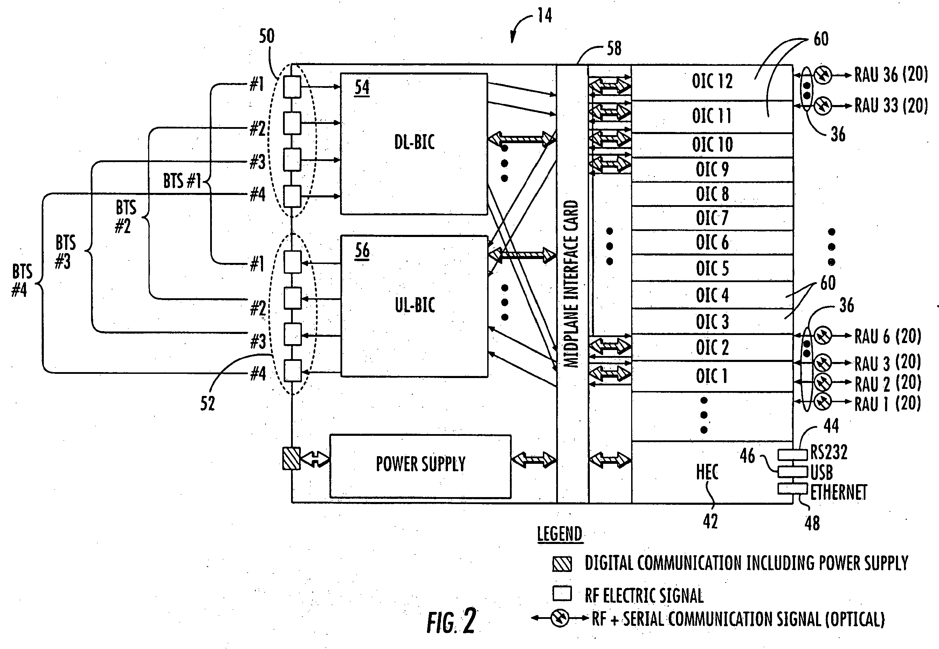

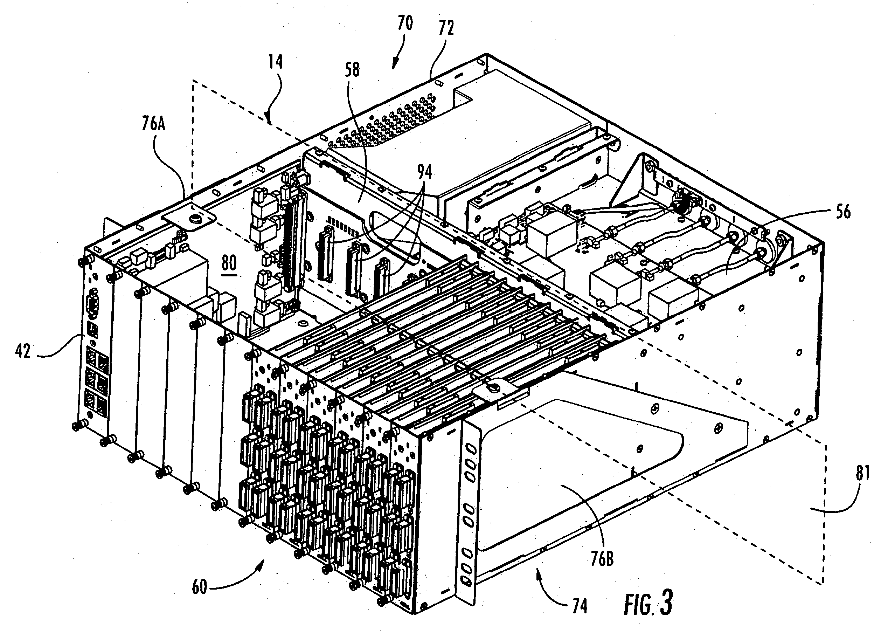

Optical interface cards, assemblies, and related methods, which may be suited for installation and use in antenna system equipment, are disclosed. In one embodiment, optical interface cards are disclosed. Before discussing the exemplary distributed antenna system equipment, assemblies and enclosures and their alignment features, which start at **FIG.** 3, an exemplary distributed antenna system is first described with regard to **FIGS. 1** and 2. In this regard, **FIG. 1** is a schematic diagram of a partially schematic cut-away diagram of a building **10** that generally represents any type of building in which a distributed antenna system **12** might be deployed. The distributed antenna system **12** incorporates a head-end communications unit or head-end unit (HEU) **14** to provide various types of communication services to coverage areas within an infrastructure **16** of the building **10.** The HEU **14** is simply an enclosure that includes at least one communication component for the distributed antenna system **12.** For example, as discussed in more detail below, the distributed antenna system **12** in this embodiment is an optical fiber-based wireless communication system that is configured to receive wireless radio frequency (RF) signals and provide the RF signals as Radio-over-Fiber (RoF) signals to be communicated over optical fiber **18** to remote antenna units (RAUs) **20** distributed throughout the building **10.** The distributed antenna system **12** in this embodiment can be, for example, an indoor distributed antenna system (IDAS) to provide wireless service inside the building infrastructure **10.** These wireless services can include cellular service, wireless services such as radio frequency identification (RFID) tracking, wireless fidelity (WiFi), local area network (LAN), and combinations thereof, as examples.

The terms "fiber optic cables" and/or "optical fibers" include all types of single mode and multi-mode light waveguides, including one or more optical fibers that may be upcoated, colored, buffered, ribbonized and/or have other organizing or protective structure in a cable such as one or more tubes, strength members, jackets or the like. Likewise, other types of suitable optical fibers include bend-insensitive optical fibers, or any other expedient of a medium for transmitting light signals. An example of a bend-insensitive optical fiber is ClearCurve^{®} Multimode fiber commercially available from Corning Incorporated.

With continuing reference to **FIG. 1****,** the infrastructure **16** includes a first (ground) floor **22,** a second floor **24,** and a third floor **26.** The floors **22, 24, 26** are serviced by the HEU **14** through a main distribution frame **28** to provide a coverage area **30** in the infrastructure **16.** Only the ceilings of the floors **22, 24, 26** are shown in **FIG. 1** for simplicity of illustration. In this example embodiment, a main cable **32** has a number of different sections that facilitate the placement of a large number of RAUs **20** in the infrastructure **16.** Each RAU **20** in turn services its own coverage area in the coverage area 30. The main cable **32** can include, for example, a riser section **34** that carries all of the uplink and downlink optical fiber cables to and from the HEU **14.** The main cable **32** can include one or more multi-cable (MC) connectors adapted to connect select downlink and uplink optical fiber cables, along with an electrical power line, to a number of optical fiber cables **36.**

In this example embodiment, an interconnect unit 38 is provided for each floor **22, 24,** and **26.** The interconnect units **38** include an individual passive fiber interconnection of optical fiber cable ports. The optical fiber cables **36** include matching connectors. In this example embodiment, the riser section **34** includes a total of thirty-six (36) downlink and thirty-six (36) uplink optical fibers, while each of the six (6) optical fiber cables **36** carries six (6) downlink and six (6) uplink optical fibers to service six (6) RAUs **20.** The number of optical fiber cables 36 can be varied to accommodate different applications, including the addition of second, third, etc. HEUs **14.**

According to one aspect, each interconnect unit **38** can provide a low voltage DC current to the electrical conductors in the optical fiber cables **36** for powering the RAUs 20. For example, the interconnect units **38** can include an AC/DC transformer to transform 110V AC power that is readily available in the infrastructure **16.** In one embodiment, the transformers supply a relatively low voltage DC current of 48V or less to the optical fiber cables **36.** An uninterrupted power supply could be located at the interconnect units **38** and at the HEU **14** to provide operational durability to the distributed antenna system **12.** The optical fibers utilized in the optical fiber cables **36** can be selected based upon the type of service required for the system, and single mode and/or multi-mode fibers may be used.

The main cable **32** enables multiple optical fiber cables **36** to be distributed throughout the infrastructure **16** (e.g., fixed to the ceilings or other support surfaces of each floor **22, 24** and **26)** to provide the coverage area 30 for the first, second and third floors **22, 24** and **26.** In this example embodiment, the HEU **14** is located within the infrastructure **16** (e.g., in a closet or control room), while in another example embodiment, the HEU **14** may be located outside of the building at a remote location. A base transceiver station (BTS) **40,** which may be provided by a second party such as cellular service provider, is connected to the HEU **14,** and can be co-located or located remotely from the HEU **14.** A BTS is any station or source that provides an input signal to the HEU **14** and can receive a return signal from the HEU **14.** In a typical cellular system, for example, a plurality of BTSs are deployed at a plurality of remote locations to provide wireless telephone coverage. Each BTS serves a corresponding cell and when a mobile station enters the cell, the BTS communicates with the mobile station. Each BTS can include at least one radio transceiver for enabling communication with one or more subscriber units operating within the associated cell.

The HEUs **14** are host neutral systems in this embodiment which can provide services for one or more BTSs **40** with the same infrastructure that is not tied to any particular service provider. The HEU **14** is connected to six (6) optical fiber cables 36 in this embodiment.

**FIG. 2** is a schematic diagram of the exemplary HEU **14** provided in the distributed antenna system **12** of **FIG. 1** to provide further detail. As illustrated therein, the HEU **14** includes a number of exemplary distributed antenna system components. A distributed antenna system component can be any component that supports communication for the distributed antenna system, such as the distributed antenna system **12 of** **FIG. 1****.** For example, a head-end controller (HEC) **42** is included that manages the functions of the HEU **14** components and communicates with external devices via interfaces, such as a RS-232 port **44,** a Universal Serial Bus (USB) port **46,** and an Ethernet port **48,** as examples. The HEU **14** can be connected to a plurality of BTSs, transceivers, etc. at BIC connectors **50, 52.** BIC connectors **50** are downlink connectors and BIC connectors **52** are uplink connectors. Each downlink BIC connector **50** is connected to a downlink BTS interface card (BIC) **54** located in the HEU **14,** and each uplink BIC connector **52** is connected to an uplink BIC 56 also located in the HEU **14.** The downlink BIC **54** is configured to receive incoming or downlink RF signals from the BTS inputs, as illustrated in **FIG. 2****,** to be communicated to the RAUs **20.** The uplink BIC **56** is configured to provide outgoing or uplink RF signals from the RAUs **20** to the BTSs as a return communication path.

The downlink BIC **54** is connected to a midplane interface card **58.** The uplink BIC **56** is also connected to the midplane interface card 58. The downlink BIC **54** and uplink BIC **56** can be provided in printed circuit boards (PCBs) that include connectors that can plug directly into the midplane interface card **58.** The midplane interface card **58** is also in direct electrical communication with a plurality of optical interface cards (OICs) **60,** which are in optical and electrical communication with the RAUs **20** via the optical fiber cables **36.** The OICs **60** convert electrical RF signals from the downlink BIC **54** to optical signals, which are then communicated over the optical fiber cable **36** to the RAUs **20.** The OICs 60 in this embodiment support up to three **(3)** RAUs **20** each.

The OICs **60** can also be provided in a PCB that includes a connector that can plug directly into the midplane interface card **58** to couple the links in the OICs **60** to the midplane interface card **58.** In this manner, the exemplary embodiment of the HEU **14** is scalable to support up to thirty-six (36) RAUs **20** since the HEU **14** can support up to twelve (12) OICs **60.** If less than thirty-four (34) RAUs **20** are to be supported by the HEU **14,** less than twelve OICs **60** can be included in the HEU **14** and connected into the midplane interface card **58.** An OIC **60** is needed for every three (3) RAUs **20** supported by the HEU **14** in this embodiment. OICs **60** can also be added to the HEU **14** and connected to the midplane interface card **58** if additional RAUs **20** are desired to be supported beyond an initial configuration. In this manner, the number of supported RAUs **20** by the HEU **14** is scalable and can be increased or decreased, as needed and in the field, by simply connecting more or less OICs **60** to the midplane interface card **58.**

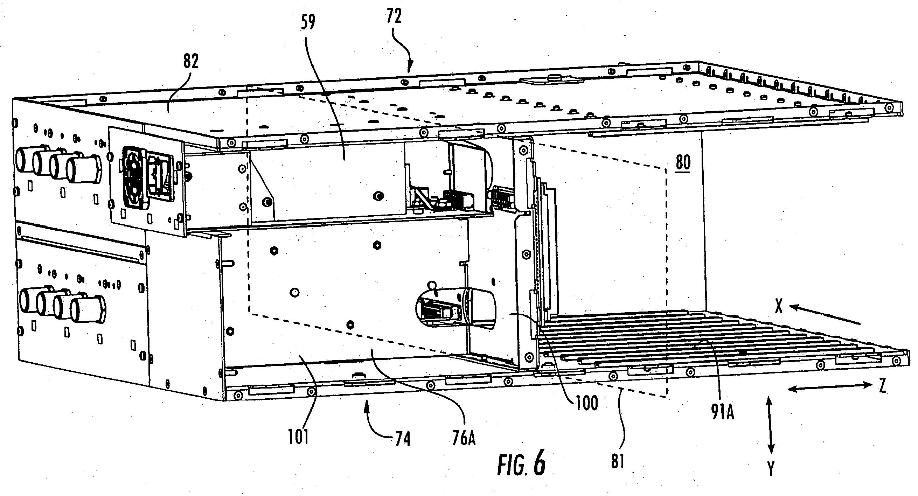

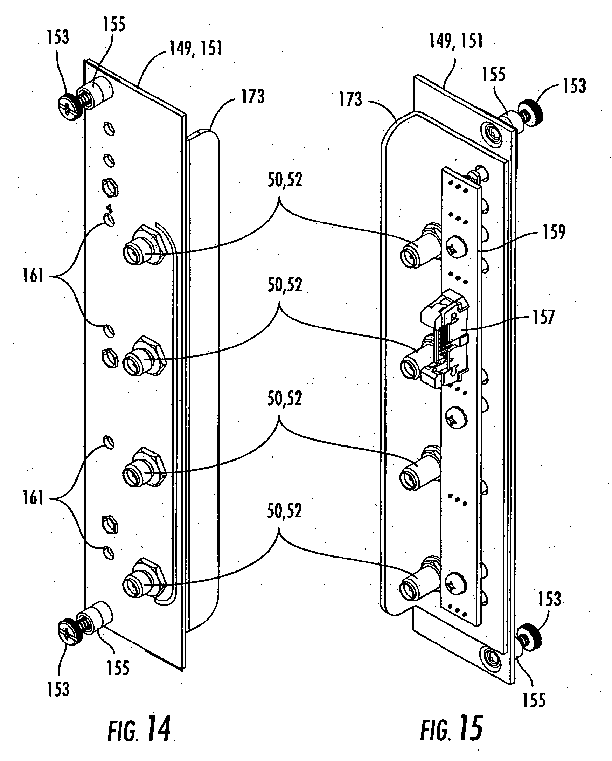

**FIG. 3** illustrates an exemplary distributed antenna system housing assembly 70 (referred to as "assembly **70")** that may be employed to provide an HEU, such as the HEU **14** in **FIG. 2****.** An HEU is simply at least one communications component provided in an enclosure or housing. As will be described in more detail below, the assembly 70 is modular. The assembly **70** is configured to be easily assembled in a factory or in the field by a technician. Further, the assembly **70** supports a number of features that allow interface cards to be easily inserted and aligned with respect to the midplane interface card **58** to ensure that proper connections are made with other components of the HEU **14** that form part of the distributed antenna system, such as the distributed antenna system **12** in **FIG. 1****,** for example. As illustrated in **FIG. 3****,** the assembly **70** includes an enclosure **72.** The enclosure **72** is comprised of a bottom plate **74** (see also, **FIG. 14B****)** and side plates **76A, 76B.** An internal cavity **80** is formed in the space formed inside the bottom plate **74** and the side plates **76A, 76B** when assembled together for locating components of the HEU 14, such as the components illustrated in **FIG. 2****,** for example. A top plate **82** can also be provided and secured to the side plates **76A, 76B,** as illustrated in **FIG. 6****,** to protect the internal cavity **80** and protect components of the HEU **14** disposed therein. Note that only two plates can be provided for the enclosure **72,** if desired. For example, one plate could be a first plate wherein a second plate is attached to the first plate. The first plate could be any of the bottom plate **74,** the side plates **76A, 76B,** and top plate **82.** Also, the second plate could be any of the bottom plate **74,** the side plates **76A, 76B,** and top plate **82.**

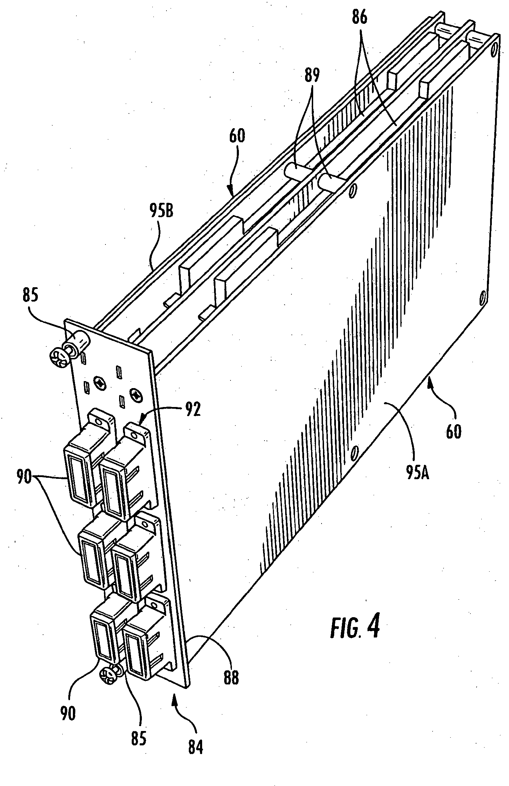

With continuing reference to **FIG. 3****,** the enclosure **72** is configured to support the OICs **60** illustrated in **FIG. 2****.** In this embodiment as illustrated **FIG. 4****,** the OICs **60** are grouped together in pairs to form an optical interface module (OIM) **84.** Thus, an OIM **84** is comprised of two (2) OICs **60** that each support up to three (3) RAUs **20** and thus the OIM **84** supports up to six (6) RAUs **20** in this embodiment. As illustrated in **FIG. 4****,** each OIC **60** is provided as a PCB **86** with integrated circuits provided therein to provide electrical signal to optical signal conversions for communication downlink and vice versa for communication uplink. An OIM plate **88** is provided to assist in coupling a pair of OICs **60** together to form the OIM **84.** As will be discussed in more detail below in this disclosure, the pair of OICs **60** are secured to the OIM plate **88** to form the OIM **84.** The OIM plate **88** serves to support the OIC **60** and contribute to the alignment the OICs **60** for proper insertion into and attachment to the enclosure **72,** which in turn assists in providing for a proper and aligned connection of the OICs **60** to the midplane interface card **58,** as shown in **FIG. 3****.** In this embodiment, the PCBs **86** are attached to shield plates **95A, 95B** that are attached to the OIM plate **88** to provide mechanical, RF, and other electromagnetic interference shielding.

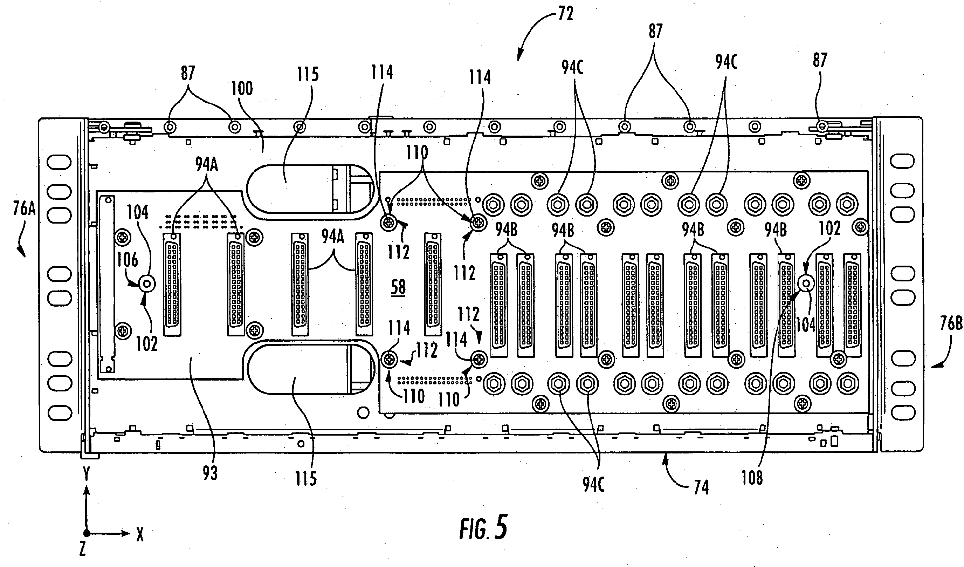

The OICs **60** are also secured together via standoff connectors **89** that contain alignment features to allow self-alignment between the OICs **60** when connected to the midplane interface card **58,** as illustrated in **FIG. 4** and as will be described in more detail in this disclosure. Connector adapters **90** are disposed in the OIM plate **88** and provide for optical connections of OIC PCBs **86** of the OICs **60.** The connector adapters **90** are disposed through openings **92** in the OIM plate **88** to provide external access when the OIM **84** is installed in the enclosure **72.** RAUs **20** can be connected to the connector adapters **90** to establish connections to the OICs **60** of the HEU **14,** and thus provided as part of the distributed antenna system **12,** via the optical fiber cables **36** in **FIG. 1** being connected to the connector adapters **90.** These connector adapters **90** may receive any type of fiber optic connector, including but not limited to FC, LC, SC, ST, MTP, and MPO. The **OIM 84** is secured to the enclosure **72** via spring-loaded connector screws **85** disposed in the OIM plate **88** that are configured to be inserted into apertures **87** (see **FIG. 5****)** to secure the OIM plate **88** to the enclosure **72,** as illustrated in **FIG. 3****.**

To provide flexibility in providing OIMs **84,** the HEC **42,** and the downlink BIC **54** and uplink BIC **56** in the HEU **14,** the enclosure **72** provides for the midplane interface card **58** to be disposed inside the internal cavity **80** extending between the side plates **76A, 76B** in a datum plane **81,** as illustrated in **FIG. 3****.** As will be discussed in more detail below, alignment features are provided in the midplane interface card 58 and the enclosure 72 such that proper alignment of the midplane interface card 58 with the enclosure **72** is effected when the midplane interface card **58** is inserted in the enclosure **72.** Thus, when the OIMs **84,** the HEC **42,** and the downlink BIC **54** and uplink BIC **56** are properly and fully inserted into the enclosure **72,** the alignment between these components and the enclosure **72** effect proper aligned connections between connectors on these components (e.g., connectors **94)** and the midplane interface card 58. Proper connection to the midplane interface card **58** is essential to ensure proper connection to the proper components in the HEU **14** to support communications as part of a distributed antenna system supported by the HEU **14.** Aligning these connections is important for proper connection, especially given that the enclosure **72** is modular and tolerances of the enclosure components in the enclosure **72** can vary.

To illustrate the alignment features to properly align the midplane interface card **58** with the enclosure **72,** **FIG. 5** is provided to illustrate a front view of the enclosure **72** with the midplane interface card **58** installed therein. **FIG.** 5 illustrates a front side **93** of the midplane interface card **58.** **FIG. 6** illustrates a rear perspective view of the enclosure **72** with the midplane interface card **58** installed. No HEU **14** components are yet installed in the enclosure **72** in **FIG. 5****.** **FIG. 6** illustrates channels **91A** that are disposed in the bottom plate **74** of the enclosure **72** to receive bottom portions of the HEC **42** and OIM **84** to align these components in the **X** and **Y** directions of the enclosure **72.** Channels **91B (****FIG. 14B****)** are also disposed on the top plate **82** and are aligned with the channels **91A** disposed in the bottom plate **74** to receive top portions of the HEC **42** and OIMs **84** to align these components in the **X** and **Y** directions. It is important that the midplane interface card 58 be properly aligned with regard to the enclosure **72** in each of the **X, Y,** and **Z** directions, as illustrated in **FIG. 5****,** because the midplane interface card **58** includes connectors **94A, 94B, 94C** that receive complementary connectors (described in more detail below) from components of the HEU 14 installed in the enclosure **72.**

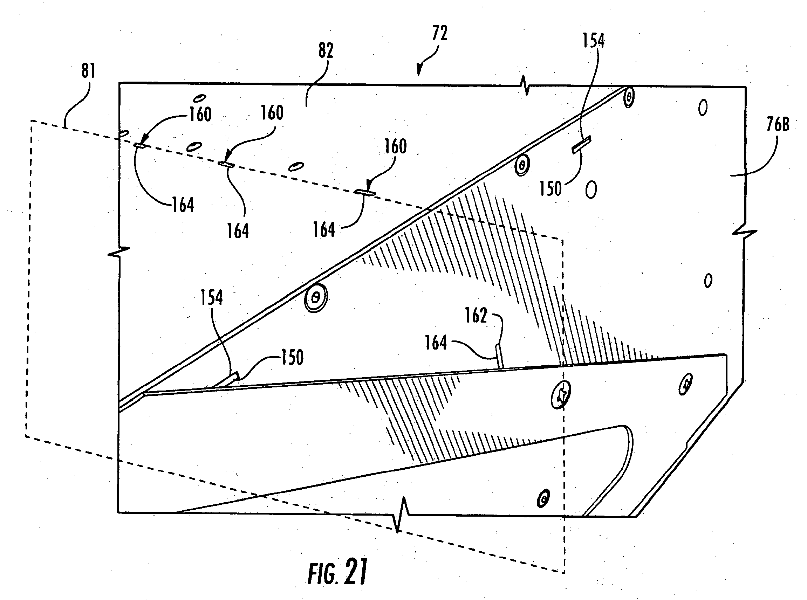

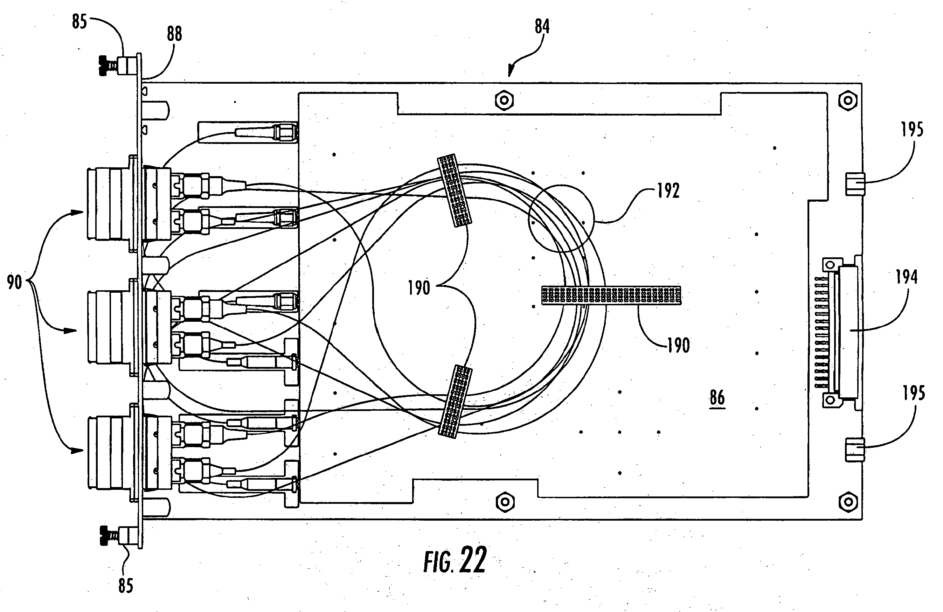

The connectors **94A** are disposed in the midplane interface card **58** and designed to accept connections from the HEC **42** and other like cards with a compatible complementary connector, as illustrated in **FIG. 3****.** The connectors **94B** are disposed in the midplane interface card **58** and designed accept digital connections from the OICs **60.** The RF connectors **94C** are disposed in the midplane interface card **58** and designed to accept RF connections from the OIC **60** (see element **195,** **FIGS. 21** **and** **22****).** The enclosure **72** is designed such that alignment of the HEU **14** components is effected with respect to the enclosure **72** when installed in the enclosure **72.** Thus, if the connectors **94A, 94B, 94C** are not properly aligned with respect to the enclosure **72,** components of the HEU **14,** by their alignment with the enclosure **72,** may not be able to establish proper connections with the midplane interface card **58** and thus will not be connected to the distributed antenna system provided by the HEU **14.**

In this regard, as illustrated in **FIGS. 5** and **6****,** a midplane support **100** is installed in the datum plane **81** of the enclosure **72** to align the midplane interface card **58** in the **X, Y,** and **Z** directions with regard to the enclosure **72.** The midplane support **100** may be a plate formed from the same material as the bottom plate **74,** the side plates **76A, 76B,** and/or the top plate **82.** The midplane support **100** provides a surface to mount the midplane interface card **58** in the enclosure **72.** A divider plate **101** is also provided and attached to the midplane support **100,** as illustrated in **FIG. 6****,** to separate compartments for the downlink and uplink BICs **54, 56** and a power supply **59 (****FIG. 6****)** to provide power for the HEC **42** and other components of the HEU **14.** As will also be described in more detail below, the modular design of the enclosure **72** is provided such that the midplane support **100** is properly aligned in the datum plane **81** in the **X, Y,** and **Z** directions when installed in the enclosure **72.** Thus, if alignment features are disposed in the midplane support **100** to allow the midplane interface card 58 to be properly aligned with the midplane support **100,** the midplane interface card **58** can be properly aligned with the enclosure **72,** and as a result, the connectors of the components of the HEU **14** installed in the enclosure **72** will be properly aligned to the connectors **94A, 94B, 94C** disposed in the midplane interface card **58.**

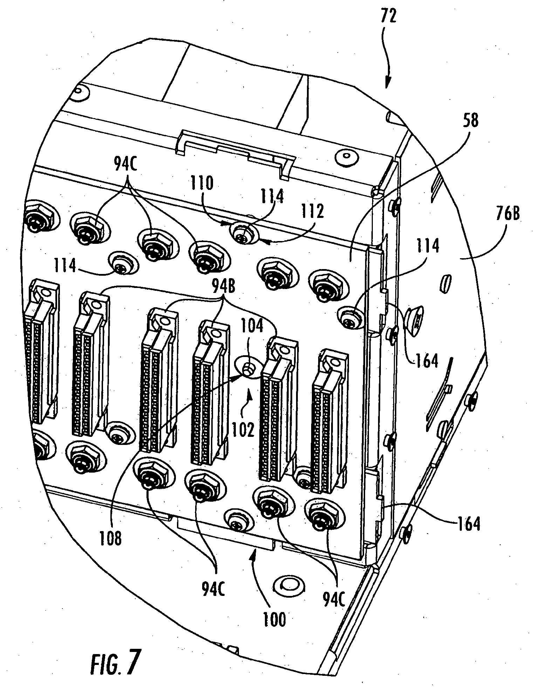

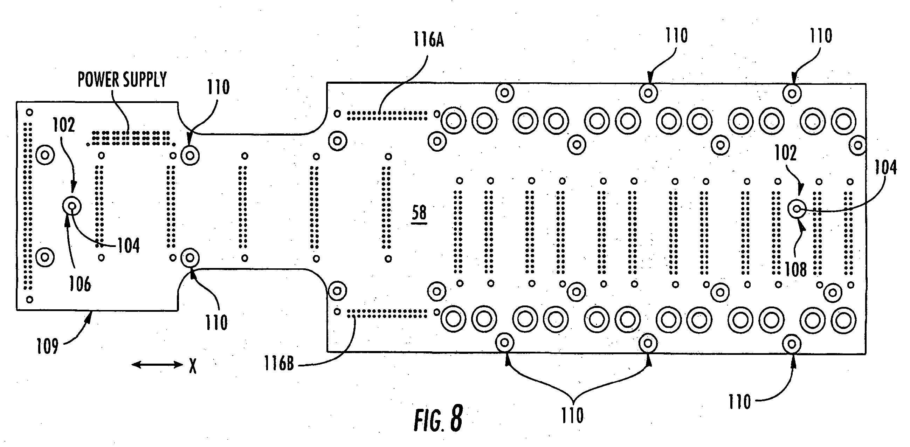

As illustrated in **FIG. 5****,** two alignment features **102** are disposed in the midplane support **100** and the midplane interface card 58 to align the midplane interface card **58** in the **X, Y,** and **Z** directions with respect to the midplane support **100,** and thus the enclosure **72.** **FIG. 7** illustrates a close-up view of the right-hand side of the midplane interface card **58** installed on the midplane support **100** that also shows one of the alignment features **102.** The alignment features **102** in this embodiment are comprised of PCB support guide pins **104** that are configured to be disposed in alignment openings **106, 108** disposed in the midplane interface card **58** and midplane support **100,** respectively. **FIG. 8** illustrates a front side **109** of the midplane interface card **58** without connectors. The PCB support guide pins **104** are installed and configured to be disposed through the alignment openings **106, 108.** Before the PCB support guide pins **104** can be inserted through both alignment openings **106, 108** disposed in the midplane interface card **58** and midplane support **100,** the alignment openings **106, 108** are aligned with the PCB support guide pins **104.** Thus, by this alignment, the midplane interface card **58** is aligned in the X and Y directions with the midplate support **100.** For example, the inner diameter of the openings **106, 108** may be .003 inches or less larger that the outer diameter of the PCB support guide pin **104.** Also, the tolerances between the center lines in the X direction of the alignment openings **106, 108** may be less than .01 inches or .005 inches, as examples, to provide an alignment between the alignment openings **106, 108** before the PCB support guide pins **104** can be disposed through both alignment openings **106, 108.** Any other tolerances desired can be provided.

Once the PCB support guide pins **104** are inserted into the openings **106, 108,** the midplane interface card **58** can be screwed in place to the midplane support **100.** In this regard, additional openings **110** are disposed in the midplane interface card **58,** as illustrated in **FIG. 5****.** These openings **110** are configured to align with openings **112** disposed in the midplane support **100** when the alignment openings **106, 108** are aligned or substantially aligned. A total of twenty (20) or other number of openings **110, 112** are disposed in the midplane interface card **58** and midplane support **100,** as illustrated in **FIG. 5****.** Fasteners **114,** such as screws for example, can be disposed through the openings **110, 112** to secure the midplane interface card **58** to the midplane support **100** and to, in turn, align the midplane interface card **58** to the midplane support **100** in the **Z** direction.

**FIG. 8** illustrates the midplane interface card **58** without the fasteners **114** disposed in the openings **110** to further illustrate the openings **110.** The fasteners **114 are** screwed into self-clinching standoff. For example, the self-clinching standoff may be disposed in the midplane support **100.** The height tolerances of the self-clinching standoffs may be between +.002 and -.005 inches, as an example. The inner diameter of the openings **110** may be .030 inches greater than the outer diameter of the fasteners **114,** for example, since openings **110** are not used to provide the alignment provided by PCB support guide pins **104** and openings **106, 108.** Further, as illustrated in **FIG. 5****,** openings **115** are disposed in the midplane support **100** to allow cabling to be extended on each side of the midplane interface card **58.** The nominal distance in one embodiment between the midplane support **100** and the midplane interface card **58** when installed is 0.121 inches, although any other distances could be provided.

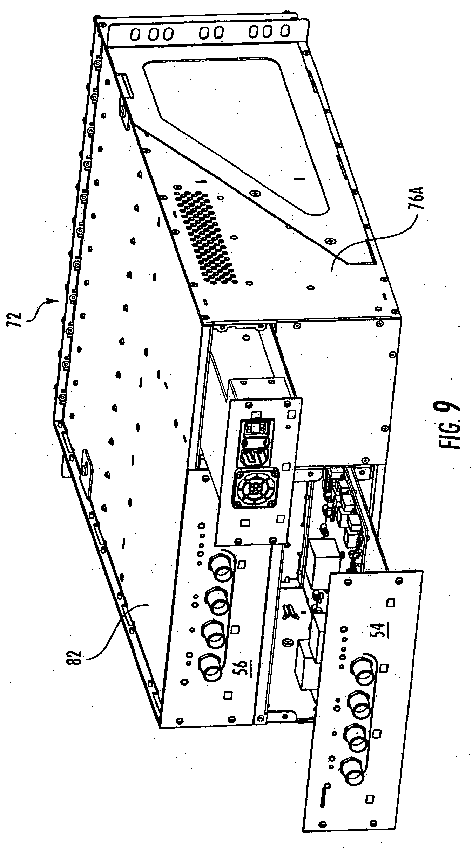

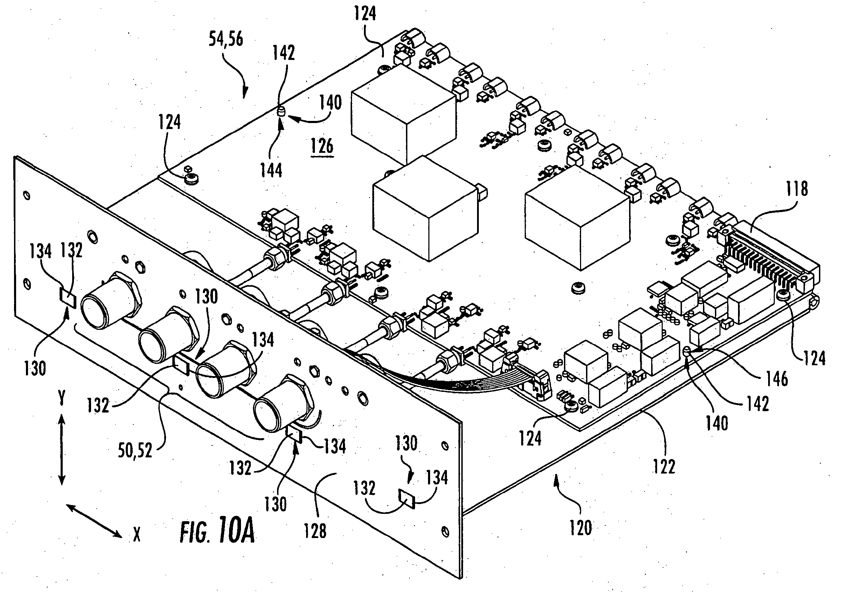

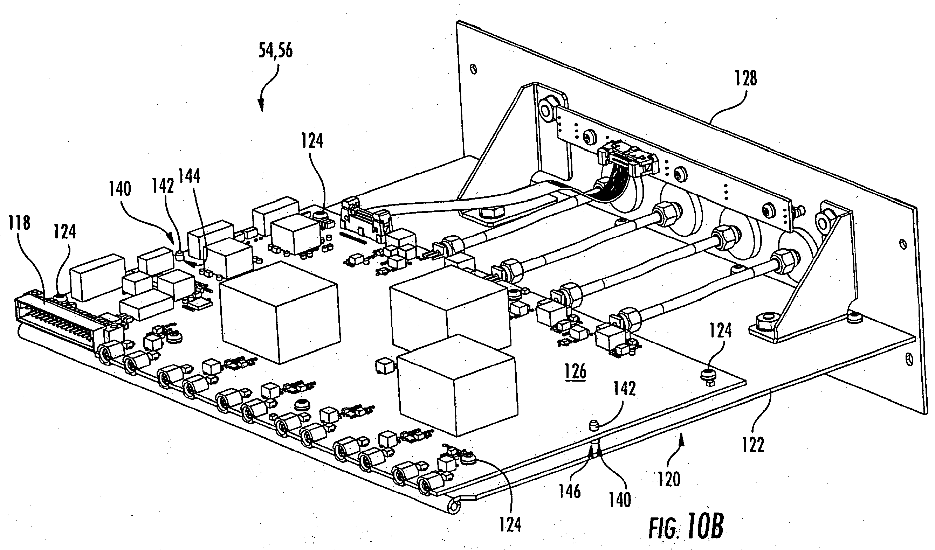

The midplane interface card **58** is also configured to receive direct connections from the downlink BIC **54** and the uplink BIC **56** when installed in the enclosure **72.** As illustrated in the rear view of the enclosure **72** in **FIG. 9****,** the downlink BIC **54** and uplink BIC **56** are designed to be inserted through a rear side **116** of the enclosure **72.** Referring back to **FIG. 8****,** connector holes **116A, 116B** are disposed on the the midplane interface card **58** in **FIG. 8** show where connectors are provided that are connected to connectors **118** (see **FIGS. 10A** and **10B****)** of the downlink BIC **54** and uplink BIC **56** when the downlink BIC **54** and uplink BIC **56** are received are fully inserted into the enclosure **72.** The alignment features **102,** by being provided between the midplane interface card **58** and the midplane support **100** as previously discussed, also provide proper alignment of the connector holes **116A, 116B** to be properly aligned with the connectors **118** in the downlink BIC **54** and uplink **BIC 56** when inserted in the enclosure **72.**

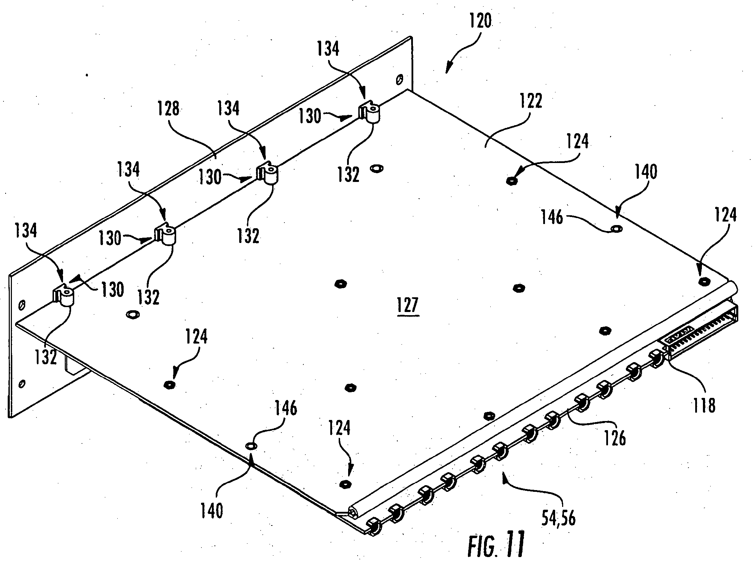

**FIGS. 10A** and **10B** illustrate a BIC assembly **120** that supports the downlink BIC **54** or the uplink BIC **56** and is configured to be received in the enclosure **72** to connect the downlink BIC **54** or the uplink **BIC 56** to the midplane interface card **58.** The BIC assembly **120** is the same whether supporting the downlink BIC **54** or the uplink BIC 56; thus, the BIC supported by the BIC assembly **120** in **FIGS. 10A** and **10B** could be either the downlink BIC **54** or the uplink BIC **56.** The BIC assembly **120** includes a BIC support plate **122** that is configured to secure the downlink and uplink BICs **54, 56.** Standoffs **124** are provided to support a BIC PCB **126** of the downlink and uplink BICs **54, 56** above the BIC support plate **122.** A BIC face plate **128** is coupled generally orthogonal to the BIC support plate **122** to secure the downlink and uplink BICs **54, 56** to the enclosure, as illustrated in **FIG. 9****.** Alignment features **130** are provided between the BIC support plate **122** and the BIC face plate **128** to ensure that the BIC PCB **126,** and thus its connector **118,** are properly aligned in the **X** and **Y** directions, as illustrated in **FIG. 9****,** when the downlink and uplink BICs **54, 56** are inserted in the enclosure **72.** Thus, the connector **118** will be properly aligned with the enclosure **72** and thus the connector holes **116A, 116B** on the midplane interface card **58** to allow a proper connection between the downlink and uplink BICs **54, 56** and the midplane interface card **58.** The alignment features **130** will ensure alignment of the BIC PCB **126** as long as the BIC PCB **126** is properly installed on the BIC support plate **122,** which will be described in more detail below. As illustrated on the bottom side **127** of the BIC assembly **120** in **FIG. 11****,** the alignment features **130** in this embodiment are protrusions **132** attached to the BIC support plate **122** that are configured to be disposed through openings **134** disposed through the BIC face plate **128,** as illustrated in **FIG. 10A****.** The downlink or uplink BIC connectors **50, 52** (see also, **FIG. 2****),** as the case may be, are disposed through the BIC face plate **128** to allow BTS inputs and outputs to be connected to the downlink and uplink BICs **54, 56,** external to the enclosure **72** when the downlink and uplink BICs **54, 56** are fully inserted in the enclosure **72.**

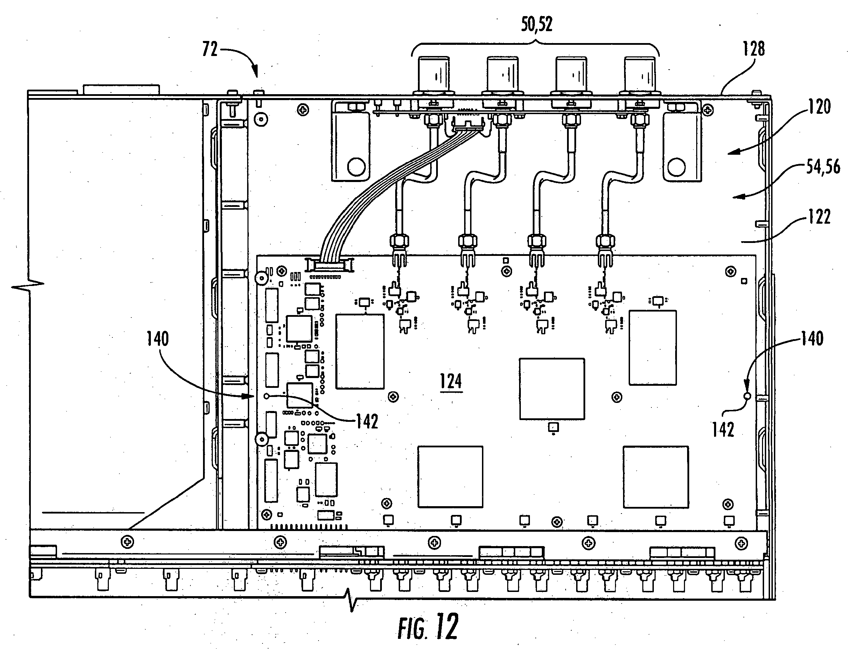

To provide alignment of the BIC PCB **126** to the BIC support plate **122,** alignment features **140** are also disposed in the BIC PCB **126** and the BIC support plate **122,** as illustrated in **FIGS. 10A****,** **10B****,** **11** and **12****.** As illustrated therein, PCB support guide pins **142** are disposed through alignment openings **144, 146** disposed in the BIC PCB **126** and BIC support plate 122, respectively, when aligned. The alignment openings **144** and **146** are designed to only be aligned to allow the PCB support guide pin **142** to be disposed therein when the alignment openings **144, 146** are in alignment. For example, the tolerances between the alignment openings **144, 146** may be less than .01 inches or less than .005 inches, as examples, to ensure an alignment between the alignment openings **144, 146** before the PCB support guide pins **142** can be disposed through both alignment openings **144, 146.** Any other tolerances desired can be provided.

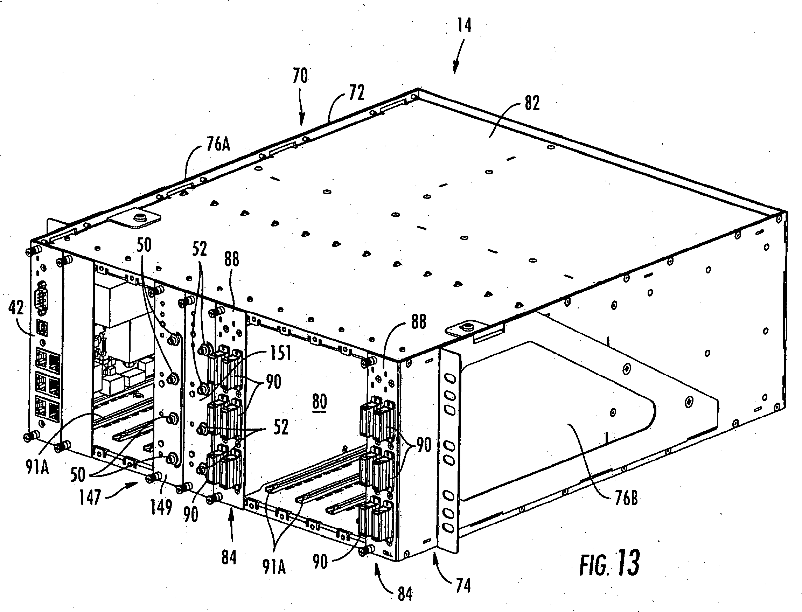

**FIGS. 9-12** described above provide the BIC connectors **50, 52** disposed through the rear **side 116** of the enclosure **70.** To establish connections with the BIC connectors **50, 52,** connections are established to the BIC connectors **50, 52** in the rear side **116** of the enclosure **72.** Alternatively, the enclosure **72** could be designed to allow connections to be established to the downlink BIC **54** and the uplink BIC 76 from the front side of the enclosure **72.** In this regard, **FIG. 13** is a side perspective view of the assembly **70** of **FIG. 3** with the downlink BIC connectors **50** for the downlink BIC and the uplink BIC connectors **52** for the uplink BIC **56** disposed through a front side **147** of the enclosure **72.** As illustrated therein, a downlink BIC connector plate **149** containing downlink BIC connectors **50** disposed therein is disposed in the front side **147** of the assembly **70.** Similarly, an uplink BIC connector plate **151** containing uplink BIC connectors **52** disposed therein is also disposed in the front side **147** of the assembly 70.

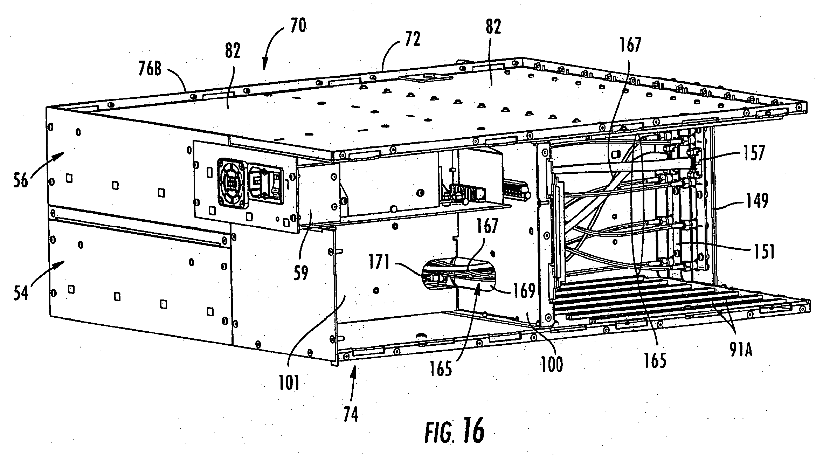

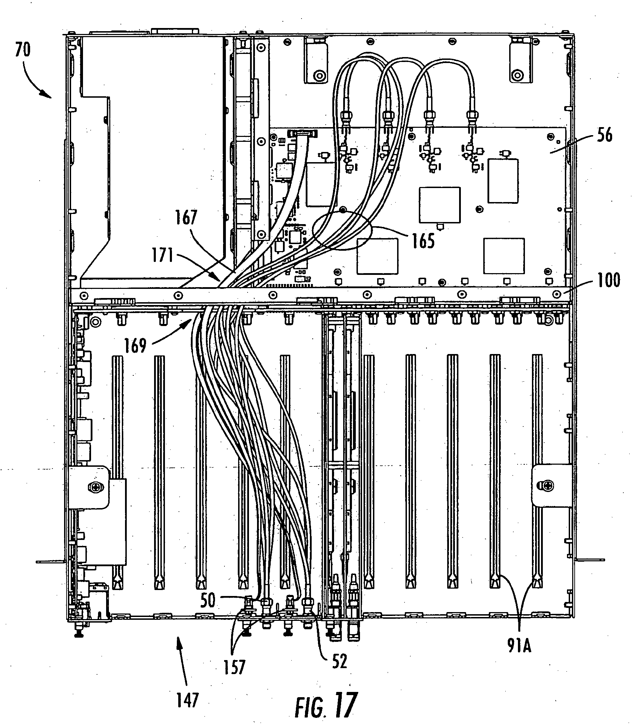

**FIGS. 14** and **15** illustrate front and rear perspective views of an exemplary BIC connector plate, which can be BIC connector plate **149** or **151.** As illustrated therein, the BIC connectors **50** or **52** are disposed through the BIC connector **plate 149** or **151** so that the BIC connectors **50** or **52** can be accessed externally through the front side **147** of the assembly **70.** Fasteners **153** can be disposed through openings **155** in the BIC connector plates **149** or **151** to fasten the BIC connector plates **149** or **151** to the assembly **70.** Channel guides **173** are attached to the BIC connector plates **149** or **151** that are configured to be received in the channels **91A, 91B** in the assembly **70** to assist in aligning the BIC connector plates **149** or **151** with the assembly **70** when disposing the BIC connector plates **149** or **151** in the assembly **70.** Because the downlink BIC **54** and uplink BIC 56 are disposed in the rear of the assembly **70,** as illustrated in **FIGS. 9-12****,** the BIC connectors **50** or **52** are provided in the BIC connector plates **149** or **151** to connect the BIC connectors **50** or **52** to the downlink BIC **54** or uplink BIC 56, as illustrated in **FIG. 15** and as will be described below with regard to **FIGS. 16** and **17****.** Further, a BIC ribbon connector **157** is disposed in the BIC connector plates **149** or **151** to connect to the downlink BIC **54** or uplink BIC **56** to carry status signals regarding the downlink BIC **54** or uplink BIC **56** to be displayed on visual indicators **161** disposed on the BIC connector plates **149** or **151.**

**FIG. 16** is a rear side perspective view of the enclosure **72** illustrating cables **165, 167** connected to the BIC connectors **50, 52** being disposed through an opening **169** in the midplane support **100** and an opening **171** in the divider plate **101.** The cables **165, 167** provide connections between the BIC connectors **50, 52** and the BIC ribbon connector **157** so that the BIC connectors **50, 52** can be disposed in the front side **147** of the assembly **70** with the downlink BIC **54** and the uplink BIC **56** disposed in the rear of the assembly **70.** **FIG. 17** is a top view of the assembly **70** further illustrating the routing of the cables **165, 167** connecting the BIC connectors **50, 52** and BIC ribbon connector **157** through the openings **169, 171** to the downlink BIC **54** and uplink BIC **56.**

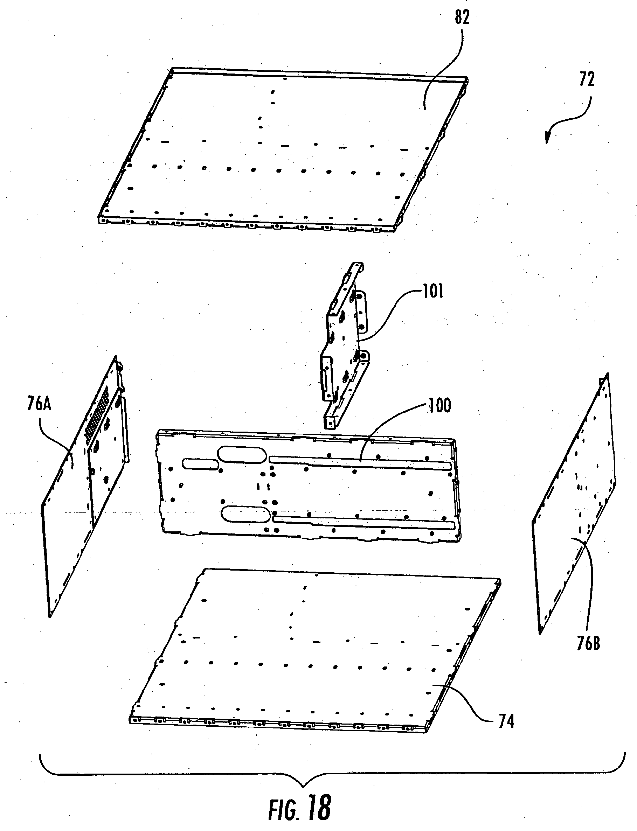

The enclosure **72** is also provided as a modular design to allow the enclosure to be easily assembled and to effect proper alignment between the various plates and components that form the enclosure **72.** For example, **FIG. 18** illustrates a front exploded perspective view of the enclosure **72.** As illustrated therein, the enclosure **72** is formed from the side plates **76A, 76B** being connected to and between the bottom plate **74** and the top plate **82.** The midplane support **100** is configured to be disposed in the datum plane **81** (see **FIG. 5****)** of the enclosure **72** when assembled. The divider plate **101** is configured to be attached to the midplane support **100** generally orthogonal to the datum plane **81** to divide compartments for the downlink and uplink BICs **54, 56** and a power module disposed in the HEU **14** on the rear side of the midplane support **100.**

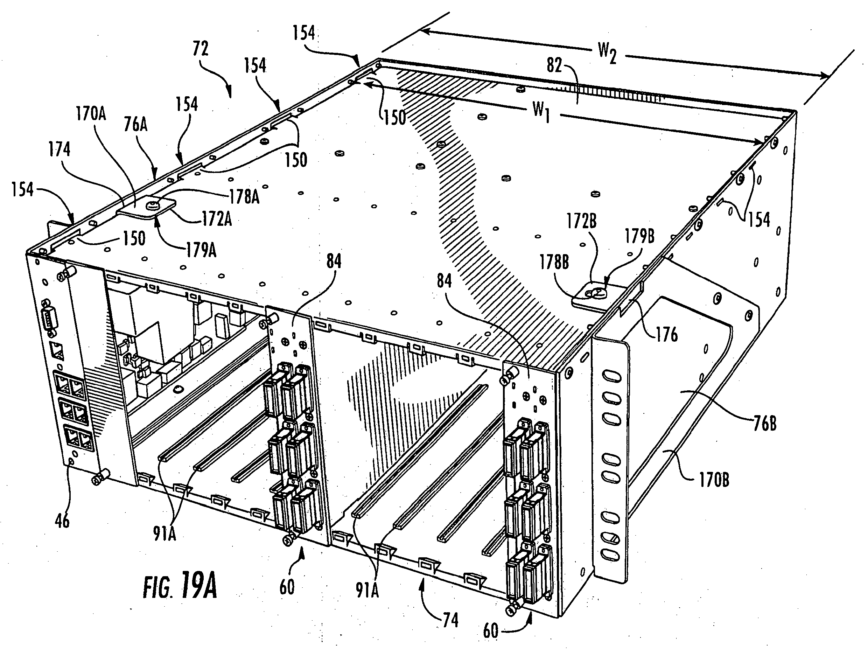

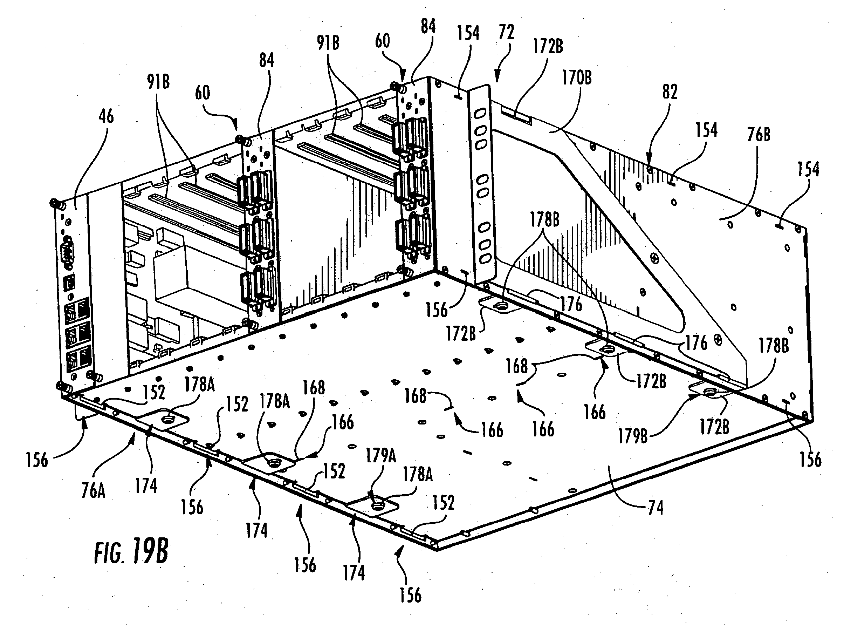

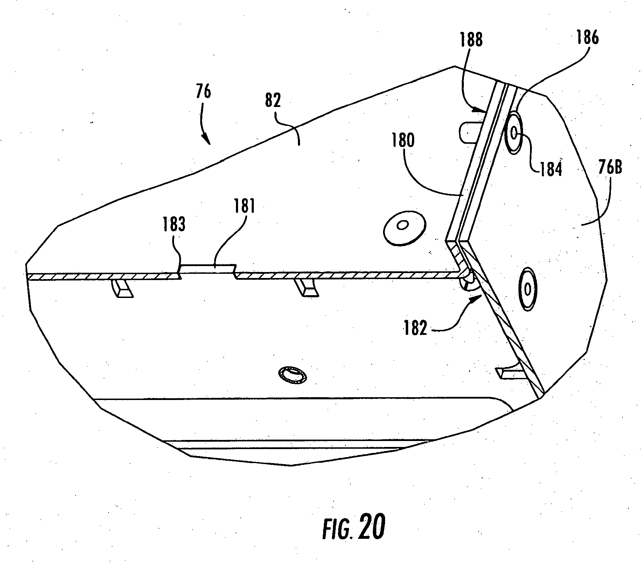

To further illustrate the modularity and ease in assembly of the enclosure **72,** **FIGS. 19A** and **19B** illustrate top and bottom perspective view, respectively, of the enclosure **72** to further illustrate how the side plates **76A, 76B** are attached to the top plate **82** and bottom plate **74.** In this regard, the top and bottom plates **82, 74** include an alignment feature in the form of locating tabs **150, 152.** The locating tabs **150, 152** are integrally formed in the top and bottom plates **74, 82** and are configured to engage with complementary alignment openings or alignment slots **154, 156** integrally disposed in the side plates **76A, 76B.** **FIGS 19A** and **19B** also illustrates a close-up view of the top plate 82 attached to the side plate **76B** and the locating tabs **150** engaged with the alignment slots **154.** This allows the top and bottom plates **74, 82 to** be attached in proper alignment quickly and easily with the side plates **76A, 76B** when assembling the enclosure **72.** In the enclosure **72,** there are four (4) locating tabs **150, 152** on each side of the top and bottom plates **82, 74,** and four (4) complementary alignment slots **154, 156** disposed on each side of the side plates **76A, 76B,** although any number of locating tabs and slots desired can be employed. Fasteners can then be employed, if desired to secure the locating tabs **150, 152** within the alignment slots **154, 156** to prevent the enclosure **72** from disassembling, as illustrated in **FIG. 20. FIG. 20** also illustrates a close-up view of the top plate **82** attached to the side plate **76B** in this regard.

As illustrated in **FIG. 20****,** the top plate **82** contains rolled or bent up sides **180** that are configured to abut tightly against and a top inside side **182** of the side plate **76B.** The same design is provided between the top plate **82** and the side plate **76A,** and the bottom plate **74** and the side plates **76A, 76B.** An outer width **W₁** of the top and bottom plates **82, 74** is designed such that the fit inside an inner width **W₂** of the side plates **76A, 76B,** as illustrated in **FIG. 19A****.** Fasteners **184** disposed in openings **186** in the side plates **76A, 76B** and openings **188** in the top and bottom plates **82, 74** pull the side plates **76A, 76B** and the top and bottom plates **82, 74** close together tightly to provide a tight seal therebetween. Further, as illustrated in **FIG. 20****,** an alignment tab **181** extending from the midplane support **100** is shown and extends into a slot **183** disposed in the top plate **82** to further align the midplane support **100** with the enclosure **72.**

**FIG. 21** also illustrates alignment features provided in the midplane support 100 that are configured to align the midplane support **100** with the enclosure **72.** As illustrated in **FIG. 21****,** the top plate **82** includes integral alignment slots **160** in the datum plane **81** when the top plate **82** is secured to the side plate **76B.** The side plate **76B** also includes alignment slots **162** integrally disposed along the datum plane **81** when the side plate **76B** is secured to the top plate **82.** The midplane support **100** includes locating tabs **164** that are disposed through the alignment slots **160, 162** when the midplane support **100** is properly aligned with the enclosure **72** and the top plate **82** and side plate **76B** (see also, **FIG. 7****).** In this manner, as previously described, when the midplane interface card **58** is properly aligned with the installed midplane support **100,** the midplane interface card **58** is properly aligned with the enclosure **72** and thus any HEU **14** components installed in the enclosure **72.** Alignment slots **166 similar** to alignment slots **160** are also integrally disposed in the bottom plate **74,** as illustrated in **FIG. 19B****.** These alignment slots **166** are also configured to receive locating tabs **168** in the midplane support **100,** as illustrated in **FIG. 19B****,** to align the midplane support **100.**

Further, as illustrated in **FIGS. 19A** and **19B**, the enclosure **72** is also configured to receive and support removable mounting brackets **170A, 170B** to secure the enclosure **72** to an equipment rack. As illustrated therein, the mounting brackets **170A, 170B** include folded down components that form tabs **172A, 172B.** The side plate **76A, 76B** include integral alignment slots **174, 176,** respectively, that are configured to receive the tabs **172A, 172B.** To secure the tabs **172A, 172B** to the enclosure **72,** fasteners **178A, 178B** are disposed through openings **179A, 179B** in the tabs **172A, 172B,** respectively, and secure to the top plate **82** and bottom plate **74.**

Other features are provided to support alignment of components of the HEU **14** and to support proper connection of these components to the midplane interface card **58.** For example, one of these components is the OIM **84,** as previously discussed. The OIM **84** is illustrated in **FIG. 22****,** wherein fiber routing guides **190** can be disposed on the outside of the PCB **86** of the OIC **60** to assist in routing optical fibers **192** from connector adapters **90** that are configured to connect to optical fibers connected to the RAUs **20** (see **FIG. 2****).** The optical fibers **192** are connected to the electronic components of the OIC **60** to convert the received optical signals from the RAUs **20** into electrical signals to be communicated to the uplink BIC **56** via connector **194** and RF connectors **195** that are connected to the midplane interface card **58** when the OIM **84** is inserted into the enclosure **72,** as previously discussed.

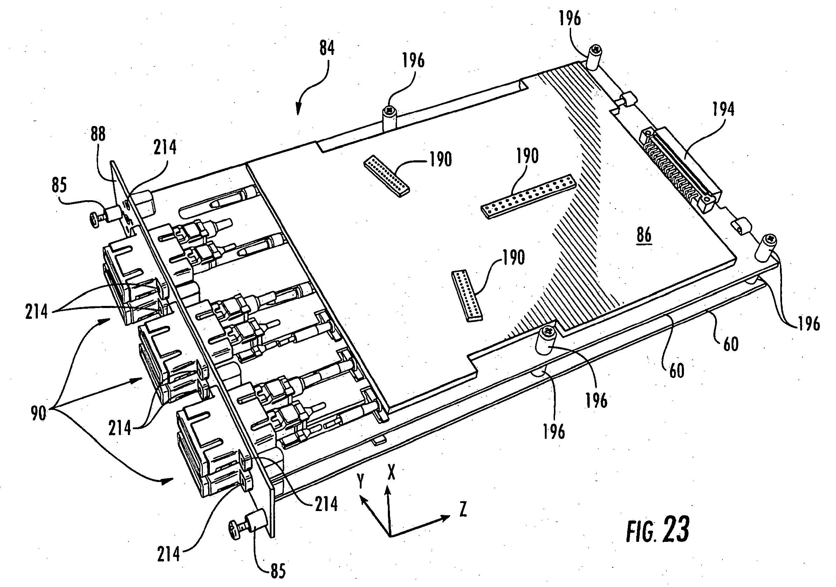

As previously discussed, the OIM **84** includes two OICs **60** connected to the OIM plate 88 to be disposed in channels **91A, 91B** in the enclosure **72.** Also, by providing two OICs **60** per OIM **84,** it is important that the connectors **194** are properly aligned and spaced to be compatible with the alignment and spacing of the complementary connectors **94B** in the midplane interface card **58** (see **FIG. 5****).** Otherwise, the OICs **60** may not be able to be properly connected to the midplane interface card **58.** For example, if the PCBs **86** of the OICs **60** are not both secured in proper alignment to the OIM plate **88,** as illustrated in **FIG. 23****,** one or both OICs 60 may not be aligned properly in the **Z** direction.

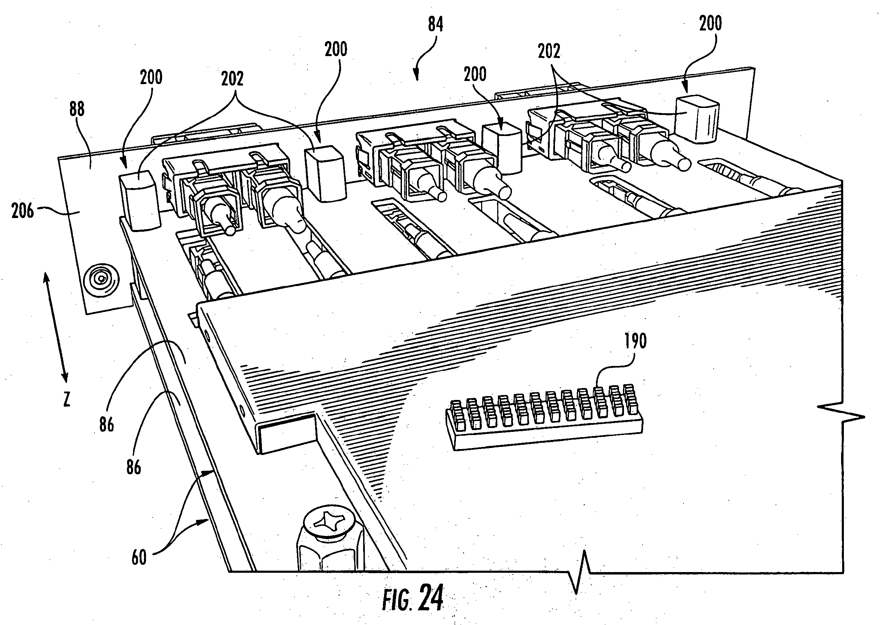

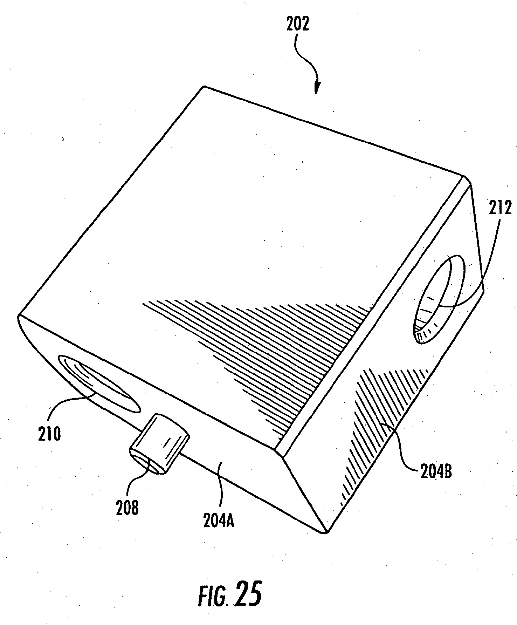

In this regard, **FIG. 24** illustrates an alignment feature **200** to ensure that the PCBs **86** of the OICs **60** are properly secured and aligned with regard to the OIM plate **88** in the **Z** direction. As illustrated in **FIG. 24** and more particularly in **FIG. 25****,** an alignment block **202** is provided. As illustrated in **FIG. 25****,** the alignment block **202** includes two alignment surfaces **204A, 204B.** As illustrated in **FIG. 24** and **25****,** alignment surface **204A** is configured to be disposed against the surface of the PCB **86.** Alignment surface **204B** is configured to be disposed against a rear surface **206** of the OIM plate **88,** as also illustrated in **FIG. 24****.** As illustrated in **FIG. 25****,** guide pin **208** extends from the alignment surface **204A** that is configured to be disposed in an opening in the PCB **86** of the OICs **60.** An opening **210** disposed in the alignment surface **204A** is configured to align with an opening disposed in the PCB **86** wherein a fastener can be disposed therein and engaged with the opening **210** to secure the PCB **86** to the alignment block **202.** To align the alignment block **202** to the PCB **86,** the guide pin **208** is aligned with an opening in the PCB **86** and inserted therein when aligned.

The alignment surface **204B** also contains an opening **212** that is configured to receive a fastener **214 (****FIG. 23****)** disposed through the OIM plate **88** and engage with the opening **212.** Some of the fasteners **214** may be configured to also be disposed through openings in the connector adapters **90,** as illustrated in **FIG. 23****,** to secure both the connector adapters **90** to the OIM plate **88** and the OIM plate **88** to the OICs **60.** pin this manner, the OIM plate **88** is secured to the alignment block 202, and the alignment block **202** is aligned and secured to the PCB **86.** Thus, the OIM plate **88** is aligned with the PCB **86** of the OIC **60** in the Z direction.

Further, when tolerances are tight, it may be difficult to ensure proper mating of all connectors **194, 94B** between the OICs **60** and the midplane interface card **58.** For example, as illustrated in **FIG. 23****,** if the spacing between standoffs **196** securing and spacing apart the PCBs **86** of the OICs **60** is not the same as the spacing between connectors **94B** in the midplane interface card **58,** alignment of the OICs **60** in the **X, Y,** or **Z** directions may not be proper, and thus only one or neither OIC **60** may be able to be connected to the midplane interface card **58** and/or without damaging the midplane interface card **58** and/or its connectors **94B.**

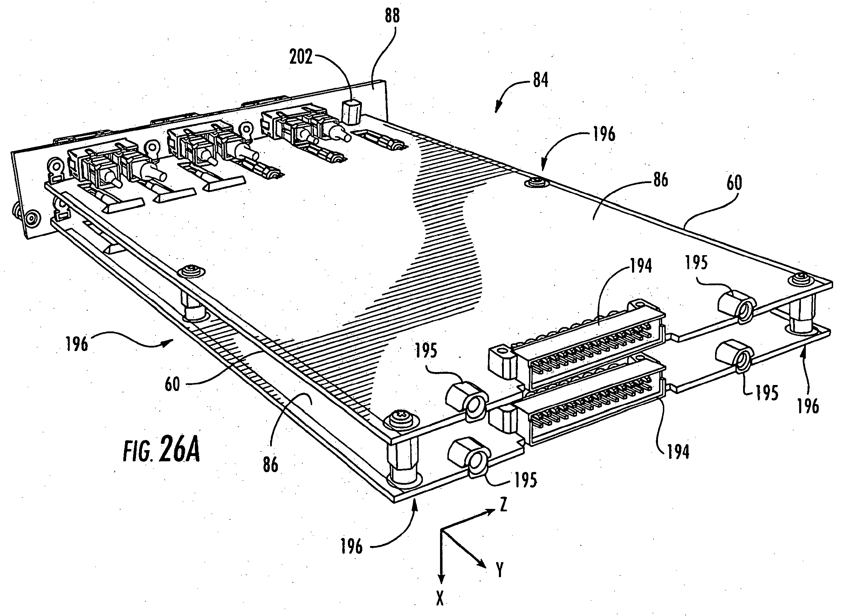

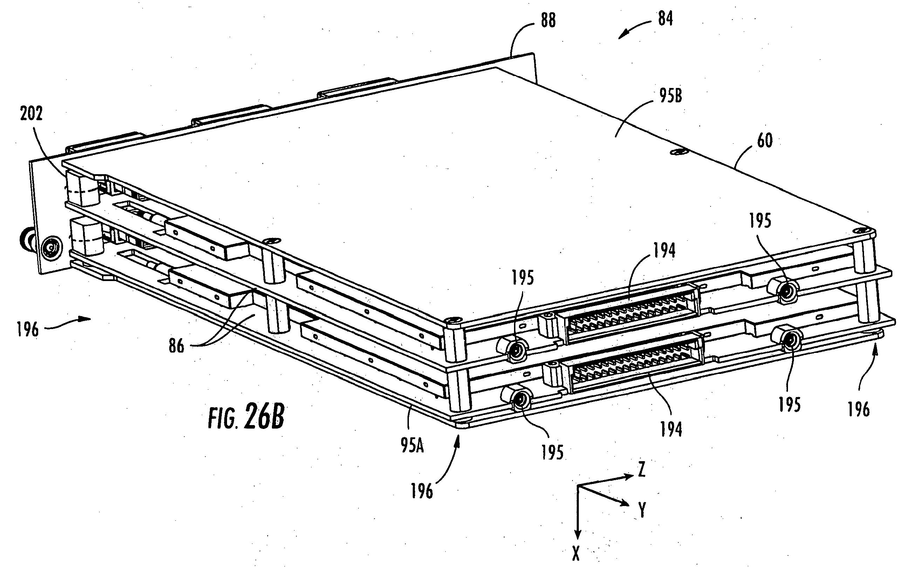

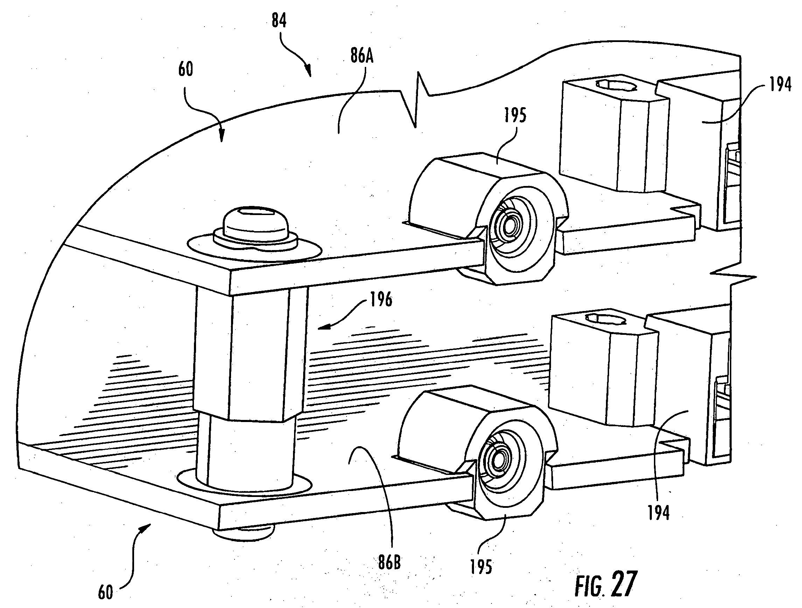

In this regard, **FIG. 26A** illustrates a rear perspective view of the OIM **84** of **FIGS. 23** **and** **24** with standoffs **196** provided between the two PCBs **86** of the OICs **60** that allow one PCB **86** to float with regard to the other PCB **86.** **FIG. 26B** illustrates a rear perspective view of the OIM **84** of **FIG. 26A** within optional shield plates **95A, 95B** installed to the PCBs **86** and to the OIM plate **88** to provide mechanical, RF, and other electromagnetic interference shielding. In this regard, tolerances are eased when the **OICs 60** are secured to the OIM plate **88** to allow one connector **194** of an OIC **60** to move or float slightly in the **X, Y,** or Z directions with regard to the other OIC 60, as illustrated in **FIGS. 26A** **and** **26B****.** **FIG. 27** illustrates a close-up view of one standoff **196** between two PCBs **86A, 86B** of the OICs **60.** As will be described in more detail below, the standoff **196** is allowed to float about the top PCB **86A** to allow the positioning or orientation of the top PCB **86A** to move slightly in the **X, Y,** or **Z** directions with regard to the bottom PCB **86B.**

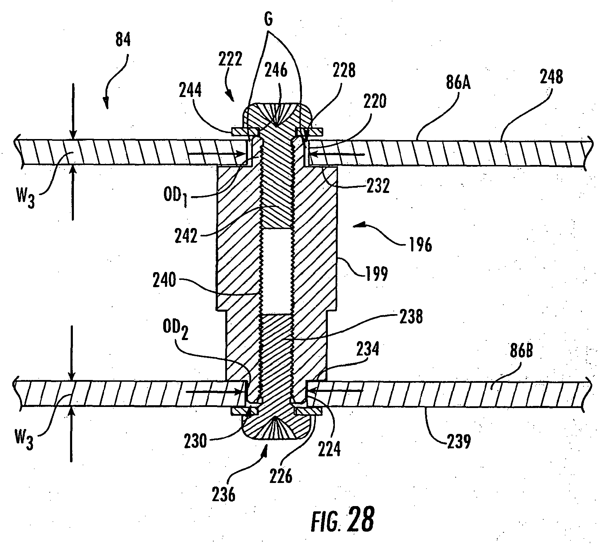

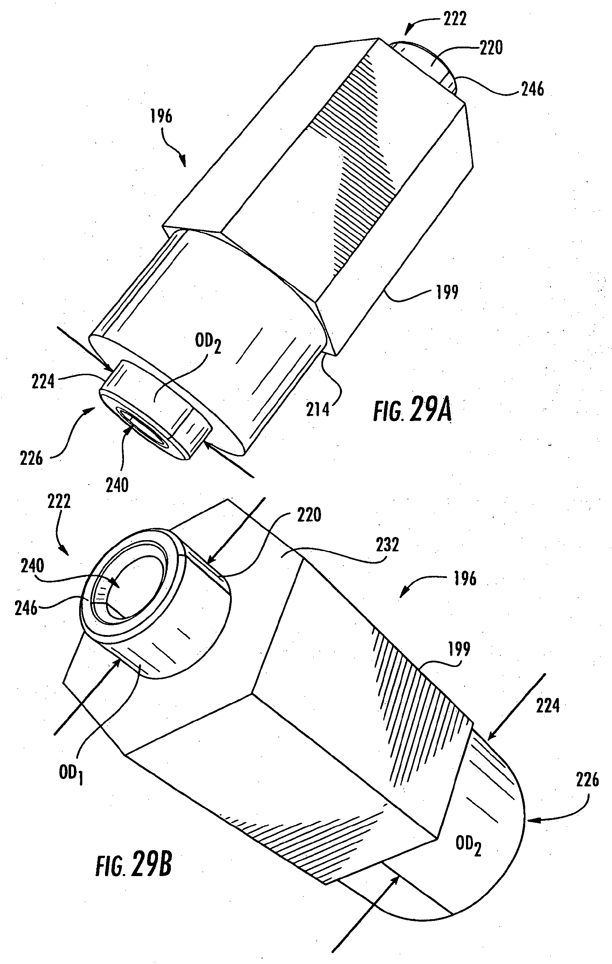

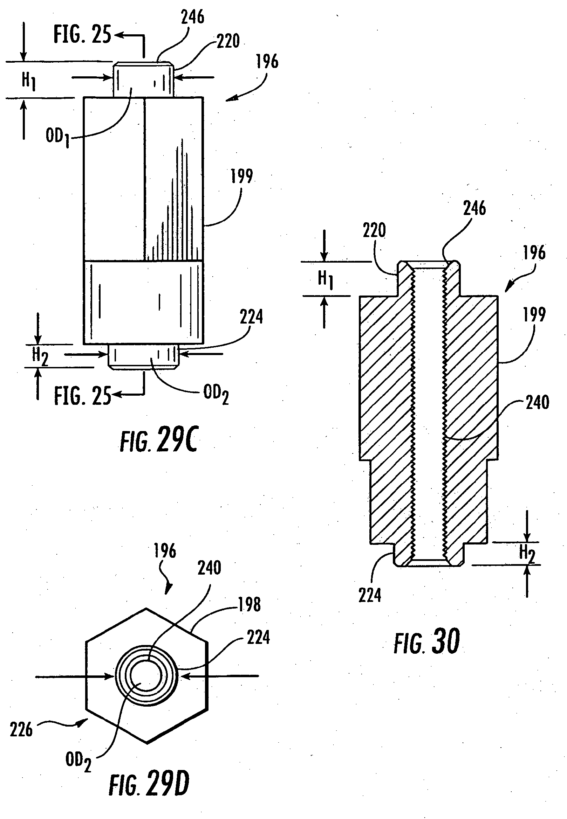

**FIG. 28** is a side cross-sectional view of the top and bottom PCBs **86A, 86B** of the OIM **84** mounted to each other with the standoff **196,** as illustrated in **FIGS. 26A** and **26B** and **28,** to further illustrate the floating top PCB **86A.** In this regard, the standoff **196** is comprised of a body **199.** The body **199** of the standoff **196** is also illustrated in the perspective, side and top view of the standoff in **FIGS. 29A-29C****,** respectively. The body **199** includes a first collar **220** at a first end **222** of the body **199** of an outer diameter **OD₁** than is smaller than an outer diameter **OD₂** of a second collar **224** located at a second end **226** of the body **199,** as illustrated in **FIG. 28-30****.** The first and second collars **220, 224** are configured to be received within openings **228, 230** of the top and bottom PCBs **86A, 86B,** as illustrated in **FIG. 28****.** The first end **222** and second end **226** of the body **199** contains shoulders **232, 234** that limit the amount of disposition of the first and second collars **220, 224** through the openings **228, 230 in** the top and bottom PCBs **86A, 86B.**

As illustrated in **FIG. 28****,** the second collar **224** is designed so that the outer diameter **OD₂** includes a tight tolerance with the inner diameter of the opening 230. In this manner, the second collar **224** will not float within the opening **230.** Further, a height **H₂** of the second collar **224** (see **FIG.29C****)** is less than a width **W₃** of the PCB **86A** and opening **230** disposed therein, as illustrated in **FIG. 28****.** This allows a **head 236** of a fastener **238** to be secured directly onto the outer surface **239** of the bottom PCB **86B** when disposed through a threaded shaft **240** of the body **199** to firmly secure the standoff **196** to the bottom PCB **86B.** Because of the outer diameter **OD₂** and height **H₂** provided for the second collar **224** of the standoff **196,** the bottom PCB **86B** does not float.

However, to allow the top PCB **86A** to float, the outer diameter **OD₁** and height **H₁** of the first collar **220** is different from that of the second collar **224.** In this regard, as illustrated in **FIGS. 28-29C** and **30,** the outer diameter **OD₁** of the first collar **220** is smaller than the inner diameter of the opening **228.** A gap G is formed therebetween to allow the first collar **220** to move slightly with respect to the opening **228** when disposed therein. Further, the height **H₁** of the first collar **220** is taller than the width **W₁** of the top PCB **86A,** as illustrated in **FIG. 28****.** Thus when a fastener **242** is disposed within the threaded shaft **240** and tightened, a head **244** of the fastener **242** will rest against a top surface **246** of the first collar **220.** Because the first collar **220** extends in a plane about a top surface **248** of the top PCB **86A, the** head **244** of the fastener **242** does not contact the top surface **248** of the PCB **86A.** Thus, when the fastener **242** is tightened, a friction fit is not provided between the head **244** and the top surface **248** of the PCB **86A,** allowing the top PCB **86A** to float with respect to the standoff **196** and the bottom PCB **86B.**

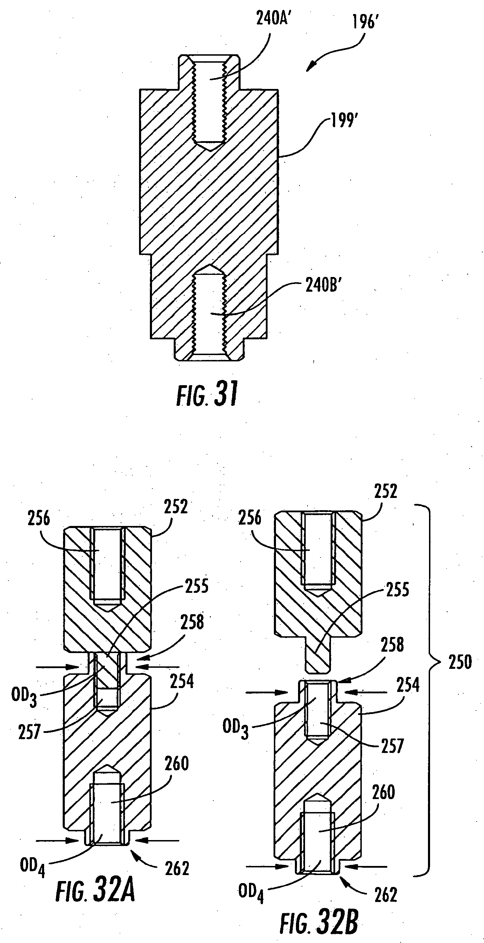

**FIG. 31** illustrates an alternative standoff **196'** that is the same as the standoff **196,** but the thread shaft does not extend all the way through the body **199'** like the standoff **196** in **FIG. 30****.** Instead, the thread shafts **240A', 240B'** are separated. The standoff **196'** can still be employed to provide the floating PCB **86** features discussed above. Also note that the standoffs **196, 196'** configured to allow a PCB to float can also be provided for the standoffs **196, 196'** provided to install any other components of the HEU **14,** including but not limited to the downlink **BIC 54** and the uplink BIC 56. Further, the design of the bodies **199, 199'** may include a hexagonal outer surface over the entire length of the bodies **199, 199'.**

**FIGS. 32A** and **32B** are side cross-sectional views of an alternative standoff **250** that can be employed to secure the OIC PCBs **86** and provide one of the OIC PCBs **86** as a floating PCB. The alternative standoff **250** may be employed to secure the OIC PCBs **86** when the shield plates **95A, 95B** are installed, as illustrated in **FIG. 26B****.** In this regard, one standoff **252** is configured to be disposed within another standoff **254.** The first standoff **252** contains a thread shaft **256** that is configured to receive a fastener to secure a shield plate **95** to the standoff **252** and the OIM **84.** The standoff **252** contains a threaded member **255** that is configured to be secured to a threaded shaft **257** disposed in the standoff **254.** The standoff **254** contains a collar **258** similar to the collar **220,** as described above in **FIGS. 28-29B****,** that surrounds the threaded shaft **257** and is configured to be received inside an opening of an OIC PCB 86 having a greater inner diameter than the outer diameter **OD₃** of the collar **258.** This allows an OIC PCB **86** disposed on the collar **258** to float with respect to another OIC PCB **86** secured to a thread shaft **260** of the standoff **254.** The standoff **254** has a collar **262** having an outer diameter **OD₄** that is configured to be received in an opening in an OIC PCB **86** that does not allow float.

Another alignment feature provided by the embodiments disclosed herein is alignment assistance provided by the digital connectors disposed in the midplane interface card **58** that accept digital connections from the OICs **60,** the downlink BIC **54,** and the uplink BIC **56.** As previously discussed and illustrated, digital connectors, including connectors **94B,** disposed in the midplane interface card **58** receive complementary digital connectors **194** from the OICs **60,** the downlink BIC **54,** and the uplink BIC **56** when inserted into the enclosure **72.** The OICs **60,** the downlink BIC **54,** and the uplink BIC **56** are designed such that their digital connections are first made to corresponding digital connectors disposed in the midplane interface card **58** when inserted into the enclosure **72** before their RF connections are made to RF connectors disposed on the midplane interface card **58.** In this manner, these digital connections assist in aligning the OICs **60,** the downlink BIC **54,** and the uplink BIC **56** in the X and Y directions with regard to the midplane interface card **58.**

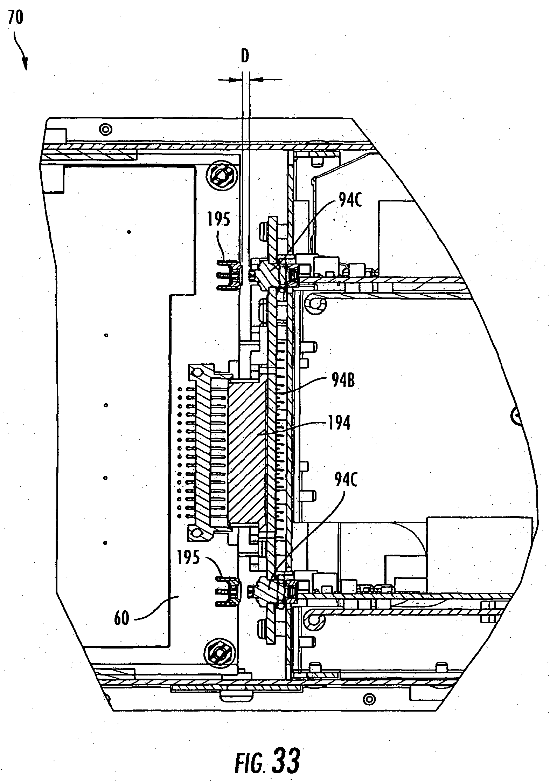

In this regard, **FIG. 33** illustrates a side view of the assembly **70** showing a digital connector **194** from an OIC **60** being connected to a complementary connector **94B** disposed in the midplane interface card 58. As illustrated therein, the digital connector **194** disposed in the OIC **60** is designed such that the digital connector **194** makes a connection with the complementary connector **94B** in the midplane interface card **58** before an RF connector **195** disposed in the OIC 60 makes a connection with the complementary RF connector **94C** disposed in the midplane interface card 58. In this regard, when the digital connector **194** begins to connect with the complementary connector **94B,** the digital connector **194** aligns with the complementary connector **94B.** The end of the RF connector **195** in the OIC **60** is still a distance **D** away from the complementary RF connector **94C.** In one non-limiting embodiment, the distance **D** may be 0.084 inches. Because the digital connectors **194** on the OICs **60** are in a fixed relationship to the RF connectors **195** provided therein in this embodiment, alignment of the digital connectors **194** also provides alignment of the RF connectors **195** of the OICs **60** to the complementary RF connectors **94C** disposed in the midplane interface card **58** as well. Thus, as the digital connector **194** is fully inserted in the complementary connector **94B,** the RF connector **195** will be aligned with the complementary RF connector **94C** when disposed therein. Alignment of the RF connector **195** may be important to ensure efficient transfer of RF signals. This feature may also be beneficial if the RF connections require greater precision in alignment than the digital connections. The same alignment feature can be provided for the downlink BIC **54** and uplink BIC **56.**

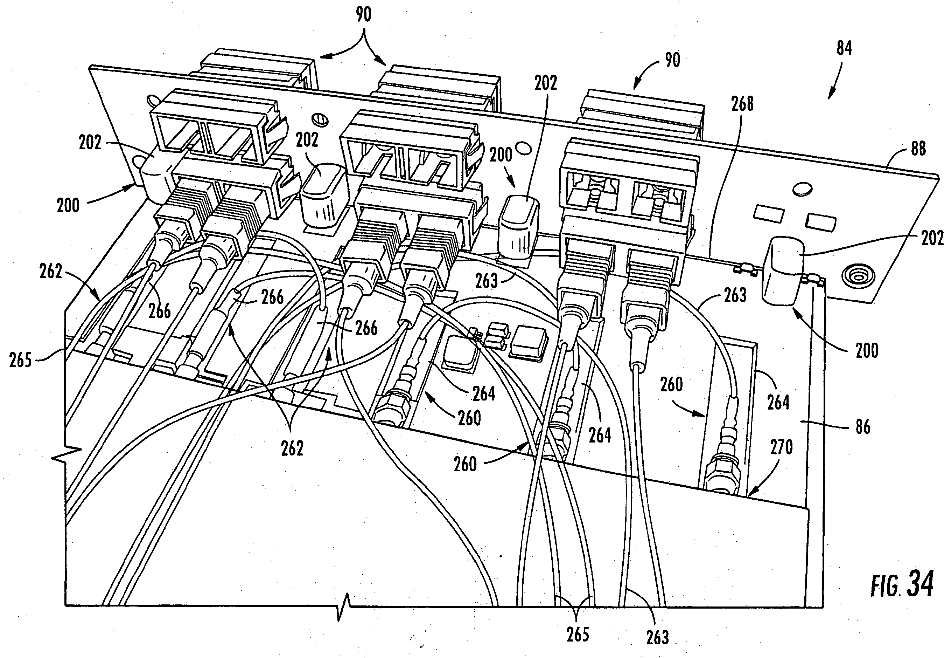

As previously discussed and illustrated in **FIG. 4****,** the OIM plate **88** provides support for the connectors **90** and for attaching the OICs **60** to the OIM plate **88** to provide alignment of the OICs 60 when inserted into the enclosure **72.** An OIM plate **88** is provided to assist in coupling a pair of OICs **60** together to form the OIM **84.** The OIM plate **88** serves to support the OICs **60** and contributes to the alignment the OICs **60** for proper insertion into and attachment to the enclosure **72,** which in turn assists in providing a proper and aligned connection of the OICs **60** to the midplane interface card **58.** In this regard, as illustrated in **FIG. 34****,** one feature that can be provided in the OIM **84** to allow the OIM plate **88** to be provided in embodiments disclosed herein is to provide an OIC **PCB 86** that extends beyond receiver optical sub-assemblies (ROSAs) and transmitter optical sub-assemblies (TOSAs) provided in the OIC **60.**

As illustrated in **FIG. 34****,** a top perspective view of the OIM **84** is provided illustrating the extension of OIC PCBs **86** beyond transmitter optical sub-assemblies (TOSAs) **262** and receiver optical sub-assemblies (ROSAs) **260.** The TOSAs **262** and ROSAs **260** are connected via optical fibers **263, 265** to the connectors **90** that extend through the OIM plate **88** to allow connections to be made thereto. By extending the OIC PCBs beyond the TOSAs **262** and ROSAs **260,** the OIM plate **88** can be secured to the OIC PCBs **86** without interfering with the TOSAs **262** and ROSAs **260.** In this embodiment, the TOSAs **262** and ROSAs **260** are mounted or positioned on an end of a PCB to transmit and/or receive optical signals interfaced with electrical signal components disposed in the OIC PCB **86.** Mounting or positioning of TOSAs 262 and ROSAs **260** on the end of a PCB may limit the length of exposed, unshielded wire extensions between the TOSAs **262** and ROSAs **260** and printed traces on the PCB. This provides for signal integrity of the signals after conversion to electrical signals.

Thus, a sufficient space is provided to allow for the TOSAs **262** and ROSAs **260** to extend beyond an end of a PCB. In this regard, openings **264, 266** are disposed in the OIC PCB **86** in this embodiment. The openings **264, 266** allow the **TOSAs 262** and ROSAs **260** to be disposed in the OIC PCB **86** without the TOSAs **262** and ROSAs **260** extending beyond an end **268** of the OIC PCB **86** where the OIM plate **84** is disposed. Thus, the openings **264, 266** allow the TOSAs **262** and ROSAs **260** to be disposed at an end **270** of the PCB where the openings **264, 266** start, but not at the end **268** of the OIC PCB **86** where the OIM plate **88** is located. In this manner, space is provided for the TOSAs **262** and ROSAs **260** such that they do not interfere with or prevent the OIM plate **88** from being disposed at the end **268** of the OIC PCB **86.**

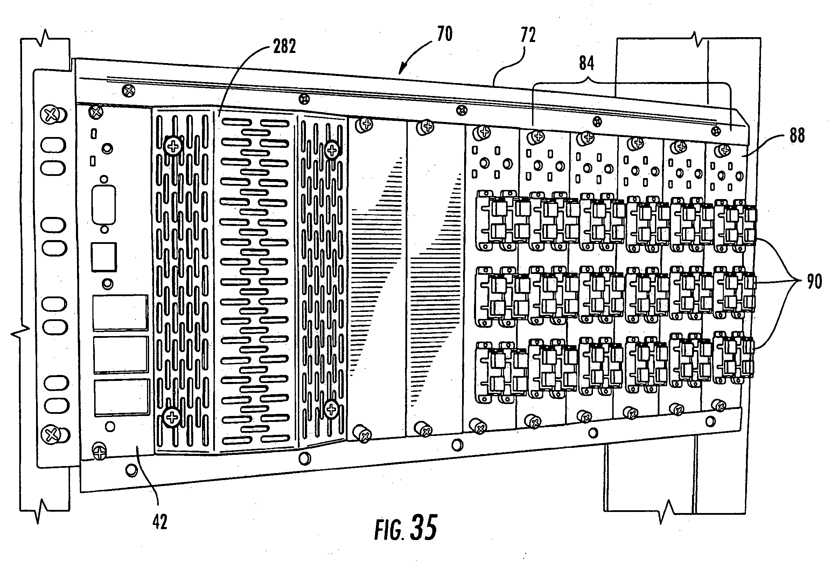

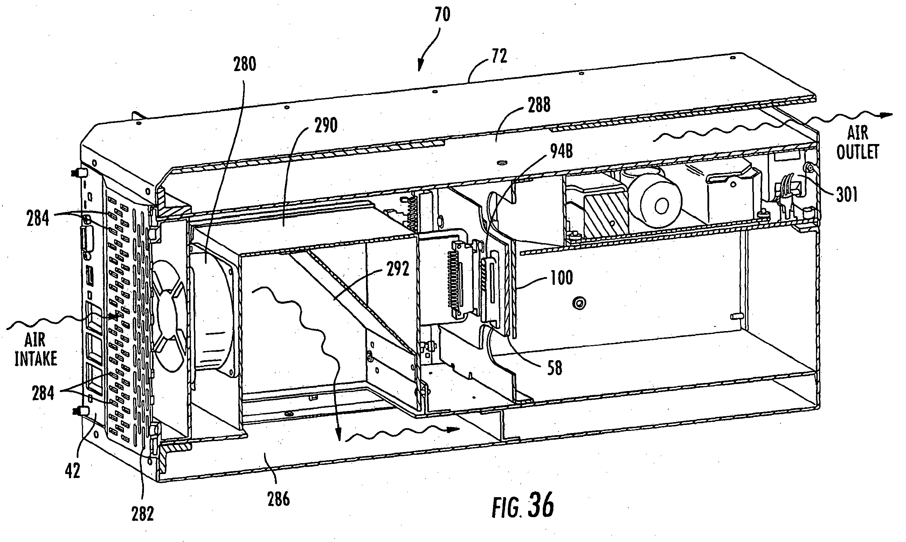

It may also be desired to provide a cooling system for the assembly **70.** The components installed in the assembly **70,** including the downlink BIC **54,** the uplink BIC **56,** the HEC **42,** and the OICs **60** generate heat. Performance of these components may be affected if the temperature due to the generated heat from the components is not kept below a threshold temperature. In this regard, **FIGS. 35** and **36** illustrate the assembly **70** and enclosure **72 of** **FIG.** 3 with an optional cooling fan **280** installed therein to provide cooling of components installed in the enclosure **72.** View of the cooling fan **280** is obscured by a cooling fan protector plate **282** in front perspective view of the assembly **70** in **FIG. 35****;** however, **FIG. 36** illustrates a side cross-sectional view of the assembly **70** and enclosure **72** showing the cooling fan **280** installed in the enclosure **72** behind the cooling fan protector plate **282** attached to the enclosure **72.** In this embodiment, cooling is provided by the cooling fan **280** taking air into the enclosure **72** through openings **284** disposed in the cooling fan protector plate **282** and drawing the air across the components in the enclosure **72,** as will be described in more detail below. The air may be pushed through the rear of the enclosure **72** through an air outlet, as illustrated in **FIG. 36****.** For example, the cooling fan **280** may be rated to direct air at a flow rate of sixty (60) cubic feet per minute (CFM) or any other rating desired.

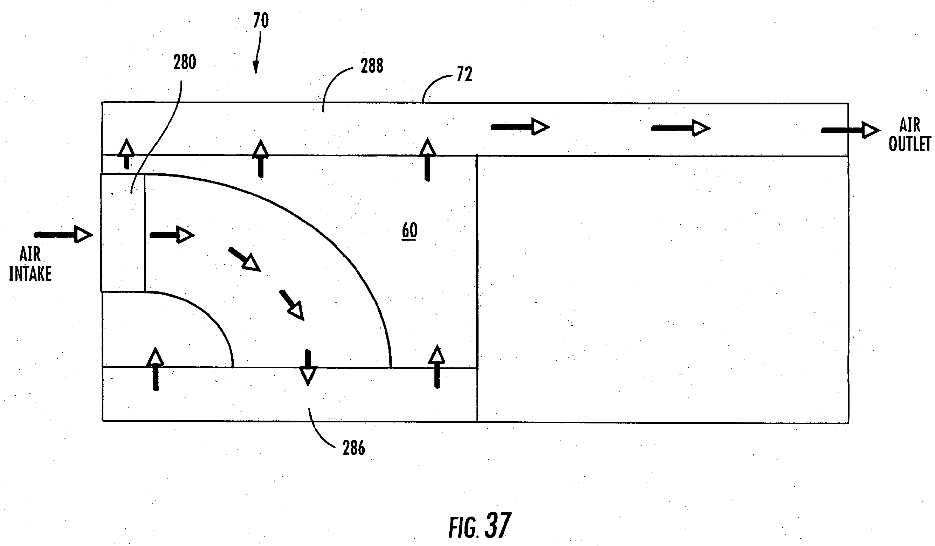

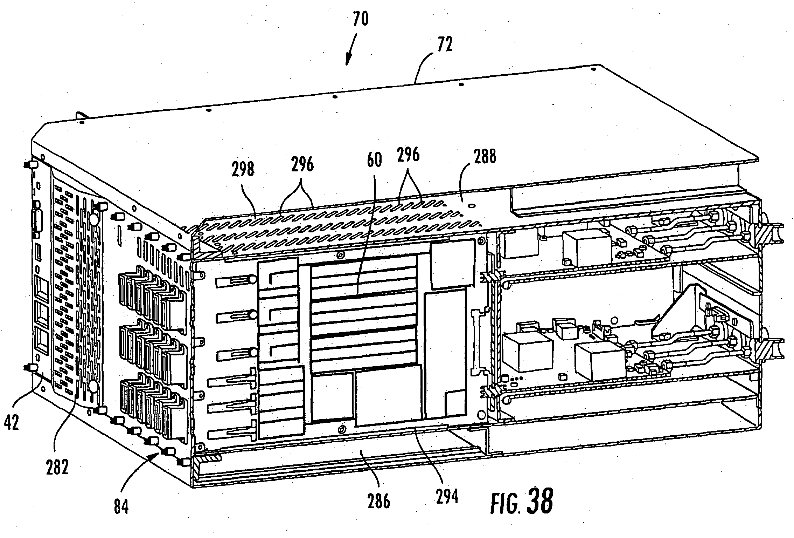

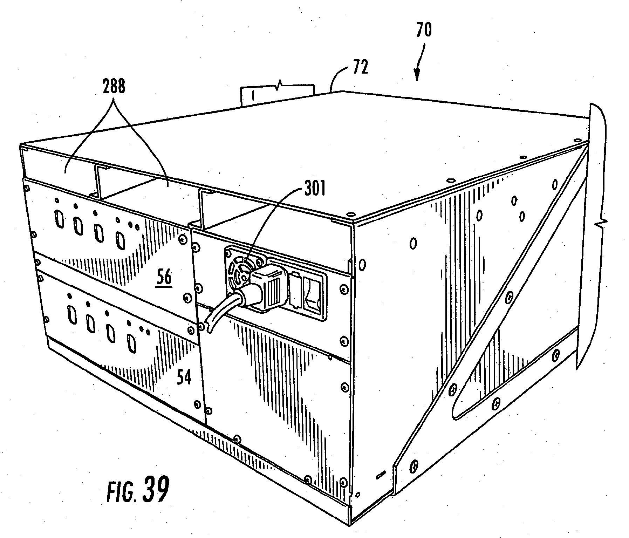

With continuing reference to **FIG. 36****,** a lower plenum **286** and an upper plenum **288** is provided in the enclosure **72.** The lower plenum **286** is provided to direct air pulled in the enclosure **72** by the cooling fan **280** initially to the bottom of the enclosure **72** to allow the air to then be directed upward through OICs **60** installed in the enclosure **72** and to the upper plenum **288** to be directed to the rear and outside of the enclosure **72.** Passing air across the OICs **60** cools the OICs **60.** This air flow design is further illustrated in the air flow diagram of **FIG. 37****.** In this regard, with reference to **FIG. 36****,** a fan duct **290** is provided behind the cooling fan **280** to direct air drawn into the enclosure **72** by the cooling fan **280.** A plate **292** is installed in the fan duct **290** to direct air flow down from the fan duct **290** into the lower plenum **286.** The air from the lower plenum **286** passes through openings disposed in a lower plenum plate **294** and then passes through the openings disposed between OICs **60** wherein the air then passes through openings **296** disposed in an upper plenum plate **298,** as illustrated in **FIG. 38****.** In this manner, air is directed across the OICs **60** to provide cooling of the OICs **60.** Air then entering into the upper plenum **288** is free to exit from the enclosure **72,** as illustrated in **FIG. 36****.** The upper plenum **288** is open to the outside of the enclosure **72** through the rear of the enclosure **72,** as illustrated in **FIGS. 36** and **37** and in **FIG. 39****.**

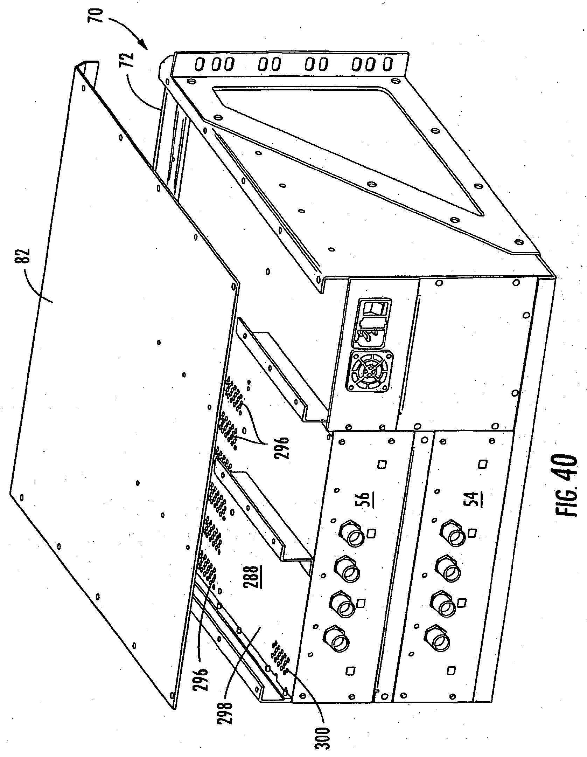

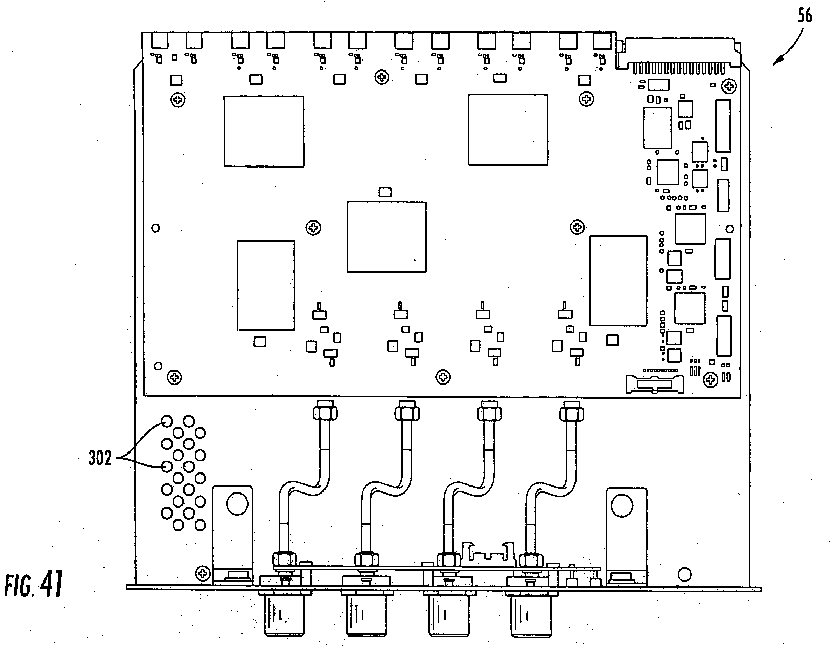

Further, as illustrated in **FIGS. 40** and **41****,** openings **300** and **302** can also be disposed in the upper plenum plate **298** above the uplink BIC 56 and in the downlink BIC **54** to provide further movement of air for cooling purposes. These openings **300, 302** allow some of the air flowing into the enclosure **72** from the cooling fan **280** to be drawn from the lower plenum **286** into the downlink BIC **54** and then into the uplink **BIC 56** via openings **302.** Air can then be directed from the uplink **BIC 56** through openings **300** and into the upper plenum **288** outside of the enclosure 72.

Further, as illustrated in **FIGS. 36****,** **39****,** and **41** an optional second cooling fan **301** is provided below the upper plenum plate **298.** In this manner, some of the air from the enclosure **72** is drawn through the power supply **59** by the second cooling fan **301** to provide cooling of the power supply **59.** For example, the second cooling fan **301** may be rated to direct air at a flow rate of thirteen (13) cubic feet per minute (CFM) or any other rating desired.

Many modifications and other embodiments set forth herein will come to mind to one skilled in the art to which the embodiments pertain having the benefit of the teachings presented in the foregoing descriptions and the associated drawings. Therefore, it is to be understood that the description and claims are not to be limited to the specific embodiments disclosed and that modifications and other embodiments are intended to be included within the scope of the appended claims. For example, the embodiments disclosed herein can be employed for any type of distributed antenna system, whether such includes optical fiber or not.

It is intended that the embodiments cover the modifications and variations of the embodiments provided they come within the scope of the appended claims and their equivalents. Although specific terms are employed herein, they are used in a generic and descriptive sense only and not for purposes of limitation.

## Claims

1. An optical interface card, comprising:
a printed circuit board (86) having a first end (268) and a second end (270) opposite the first end (268);
at least one opening (264, 266) disposed in the printed circuit board (86) between the first end (268) and the second end (270) of the printed circuit board (86) and having at least one first opening end and at least one second opening end opposite the at least one first opening end;
at least one optical sub-assembly (260, 262) mounted to the at least one first opening end and extending into the at least one opening,
whereby
an optical interface module plate (88) is mounted to the first end (268) of the printed circuit board (86), wherein the optical interface module plate (88) provides support for connectors (90),
the printed circuit board (86) extends beyond the at least one optical sub-assembly (260, 262), wherein the at least one optical sub-assembly (260, 262) is connected via optical fibers (263, 265) to the connectors (90) that extend through the optical interface module plate (88),
the at least one optical sub-assembly (260, 262) is disposed at an end of the printed circuit board (86) to transmit and/or receive optical signals interfaced with electrical signal components disposed on the printed circuit board (86),
the at least one opening (264, 266) allows the at least one optical sub-assembly (260, 262) to be disposed at the second end (270) of the printed circuit board (86) where the at least one opening (264, 266) starts, but spaced apart from the first end (268) of the printed circuit board (86) where the optical interface module plate (88) is located.

2. The optical interface card of claims 1, wherein the at least one optical sub-assembly (260, 262) is comprised of at least one of a transmitter optical sub-assembly (262) and a receiver optical sub-assembly (260).

3. The optical interface card of claim 1 or 2, further comprising at least one electrical conductor extending in a substantially straight line from an end of the at least one optical sub-assembly (260, 262) and electrically connected with one or more printed traces on the printed circuit board (86).

4. The optical interface card of claim 1 or 2, wherein the at least one opening (264, 266) is comprised of at least one rectangular opening.

5. The optical interface card of claim 1 or 2, further comprising at least one optical fiber routing guide configured to route one or more optical fibers connected to the at least one optical sub-assembly (260, 262).

6. The optical interface card of claim 1 or 2, further comprising a mounting plate mounted to the first end of the printed circuit board (86) in a plane orthogonal to a plane of the printed circuit board (86).

7. The optical interface card of claim 6, further comprising at least one alignment block mounted in at least one opening (264, 266) disposed in the printed circuit board (86) proximate the first end of the printed circuit board (86) and at least one opening disposed in the mounting plate to align the printed circuit board (86) to the mounting plate.

8. The optical interface card of claim 7, further comprising at least one guide pin disposed in the at least one alignment block engaged with the at least one opening (264, 266) disposed in the printed circuit board (86).

## Patentansprüche

1. Optische Schnittstellenkarte, die umfasst:
eine gedruckte Leiterplatte (86) mit einem ersten Ende (268) und einem zweiten Ende (270) gegenüber dem ersten Ende (268);
mindestens eine Öffnung (264, 266), die in der gedruckten Leiterplatte (86) zwischen dem ersten Ende (268) und dem zweiten Ende (270) der gedruckten Leiterplatte (86) angeordnet ist und mindestens ein erstes Öffnungsende und mindestens ein zweites Öffnungsende gegenüber dem mindestens einen ersten Öffnungsende aufweist;
mindestens eine optische Subanordnung (260, 262), die an dem mindestens einen ersten Öffnungsende montiert ist und sich in die mindestens eine Öffnung erstreckt,
wobei
eine optische Schnittstellenmodulplatte (88) an dem ersten Ende (268) der gedruckten Leiterplatte (86) montiert ist, wobei die optische Schnittstellenmodulplatte (88) einen Träger für Verbindungsteile (90) bildet,
sich die gedruckte Leiterplatte (86) über die mindestens eine optische Subanordnung (260, 262) hinaus erstreckt, wobei die mindestens eine optische Subanordnung (260, 262) über optische Fasern (263, 265) mit den Verbindungsteilen (90) verbunden ist, die sich durch die optische Schnittstellenmodulplatte (88) hindurch erstrecken,
die mindestens eine optische Subanordnung (260, 262) an einem Ende der gedruckten Leiterplatte (86) angeordnet ist, um optische Signale zu senden und/oder zu empfangen, die mit elektrischen Signalkomponenten gekoppelt sind, welche an der gedruckten Leiterplatte (86) vorhanden sind,
die mindestens eine Öffnung (264, 266) ermöglicht, dass die mindestens eine optische Subanordnung (260, 262) an dem zweiten Ende (270) der gedruckten Leiterplatte (86) angeordnet ist, wo die mindestens eine Öffnung (264, 266) beginnt, jedoch von dem ersten Ende (268) der gedruckten Leiterplatte (86) beabstandet ist, wo sich die optische Schnittstellenmodulplatte (88) befindet.

2. Optische Schnittstellenkarte nach Anspruch 1, wobei die mindestens eine optische Subanordnung (260, 262) aus mindestens einer einer optischen Sender-Subanordnung (262) und einer optischen Empfänger-Subanordnung (260) gebildet ist.

3. Optische Schnittstellenkarte nach Anspruch 1 oder 2, die ferner mindestens einen elektrischen Leiter umfasst, der sich im Wesentlichen geradlinig von einem Ende der mindestens einen optischen Subanordnung (260, 262) erstreckt und elektrisch mit einer oder mehreren gedruckten Bahnen auf der gedruckten Leiterplatte (86) verbunden ist.

4. Optische Schnittstellenkarte nach Anspruch 1 oder 2, wobei die mindestens eine Öffnung (264, 266) aus mindestens einer rechteckigen Öffnung gebildet ist.

5. Optische Schnittstellenkarte nach Anspruch 1 oder 2, die ferner mindestens eine Optikfaser-Leitungsführung umfasst, welche so ausgeführt ist, dass sie eine oder mehrere optische Fasern leitet, welche mit der mindestens einen optischen Subanordnung (260, 262) verbunden sind.

6. Optische Schnittstellenkarte nach Anspruch 1 oder 2, die ferner eine Montageplatte umfasst, welche in einer orthogonal zu einer Ebene der gedruckten Leiterplatte (86) verlaufenden Ebene an dem ersten Ende der gedruckten Leiterplatte (86) montiert ist.

7. Optische Schnittstellenkarte nach Anspruch 6, die ferner mindestens einen Ausrichtungsblock umfasst, der in mindestens einer Öffnung (264, 266) montiert ist, welche in der gedruckten Leiterplatte (86) nahe dem ersten Ende der gedruckten Leiterplatte (86) angeordnet ist, und mindestens eine Öffnung, die in der Montageplatte angeordnet ist, um die gedruckte Leiterplatte (86) mit der Montageplatte auszurichten.

8. Optische Schnittstellenkarte nach Anspruch 7, die ferner mindestens einen Führungsstift umfasst, der in dem mindestens einen Ausrichtungsblock in Zusammengriff mit der mindestens einen Öffnung (264, 266), welche in der gedruckten Leiterplatte (86) vorhanden ist, angeordnet ist.

## Revendications

1. Carte d'interface optique, comprenant :
une carte de circuit imprimé (86) ayant une première extrémité (268) et une seconde extrémité (270) opposée à la première extrémité (268) ;
au moins une ouverture (264, 266) disposée dans la carte de circuit imprimé (86) entre la première extrémité (268) et la seconde extrémité (270) de la carte de circuit imprimé (86) et comportant au moins une première extrémité d'ouverture et au moins une seconde extrémité d'ouverture opposée à l'au moins une première extrémité d'ouverture ;
au moins un sous-ensemble optique (260, 262) monté au niveau de l'au moins une première extrémité d'ouverture et se prolongeant dans au moins une ouverture,
moyennant quoi
une plaque de module d'interface optique (88) est montée au niveau de la première extrémité (268) de la carte de circuit imprimé (86), où la plaque de module d'interface optique (88) fournit un support pour des connecteurs (90),
la carte de circuit imprimé (86) se prolonge au-delà de l'au moins un sous-ensemble optique (260, 262), où l'au moins un sous-ensemble optique (260, 262) est connecté par l'intermédiaire de fibres optiques (263, 265) aux connecteurs (90) qui se prolongent à travers la plaque de module d'interface optique (88),
l'au moins un sous-ensemble optique (260, 262) est disposé à une extrémité de la carte de circuit imprimé (86) pour transmettre et/ou recevoir des signaux optiques interfacés avec des composants de signaux électriques disposés sur la carte de circuit imprimé (86),
l'au moins une ouverture (264, 266) permet à l'au moins un sous-ensemble optique (260, 262) d'être disposé au niveau de la seconde extrémité (270) de la carte de circuit imprimé (86) où l'au moins une ouverture (264, 266) commence, mais espacé de la première extrémité (268) de la carte de circuit imprimé (86) où la plaque de module d'interface optique (88) est située.

2. Carte d'interface optique selon la revendication 1, dans laquelle l'au moins un sous-ensemble optique (260, 262) est constitué d'au moins un élément parmi un sous-ensemble optique émetteur (262) et un sous-ensemble optique récepteur (260).

3. Carte d'interface optique selon la revendication 1 ou la revendication 2, comprenant en outre au moins un conducteur électrique s'étendant en une ligne sensiblement rectiligne depuis une extrémité de l'au moins un sous-ensemble optique (260, 262) et étant connecté électriquement avec une ou plusieurs traces imprimées sur la carte de circuit imprimé (86).

4. Carte d'interface optique selon la revendication 1 ou la revendication 2, dans laquelle l'au moins une ouverture (264, 266) est constituée d'au moins une ouverture rectangulaire.

5. Carte d'interface optique selon la revendication 1 ou la revendication 2, comprenant en outre au moins un guide d'acheminement de fibre optique configuré pour acheminer une ou plusieurs fibres optiques connectées à l'au moins un sous-ensemble optique (260, 262).

6. Carte d'interface optique selon la revendication 1 ou la revendication 2, comprenant en outre une plaque de montage montée au niveau de la première extrémité de la carte de circuit imprimé (86) dans un plan orthogonal à un plan de la carte de circuit imprimé (86).

7. Carte d'interface optique selon la revendication 6, comprenant en outre au moins un bloc d'alignement monté dans au moins une ouverture (264, 266) disposée dans le carte de circuit imprimé (86) à proximité de la première extrémité de la carte de circuit imprimé (86) et au moins une ouverture disposée dans la plaque de montage pour aligner la carte de circuit imprimé (86) à la plaque de montage.

8. Carte d'interface optique selon la revendication 7, comprenant en outre au moins une broche de guidage disposée dans l'au moins un bloc d'alignement en prise avec l'au moins une ouverture (264, 266) disposée dans le carte de circuit imprimé (86).
